# EUROPEAN PATENT APPLICATION

(11) **EP 4 697 783 A1**
(43) Date of publication of application: **18.02.2026**
(21) Application number: 24813819.0
(22) Date of filing: 15.03.2024
(51) Int. Cl.: H04W 24/06

(54) **MODEL TRAINING METHOD AND APPARATUS, AND STORAGE MEDIUM**

(30) Priority: 01.06.2023 CN 202310652135
(71) Applicant: Datang Mobile Communications Equipment Co., Ltd., Beijing 100085 (CN)
(72) Inventor: SUN, Wanfei, Beijing 100085 (CN); CHEN, Shanzhi, Beijing 100085 (CN); XU, Hui, Beijing 100085 (CN)
(74) Representative: Ipsilon
(86) International application number: PCT/CN2024/081841
(87) International publication number: WO 2024/244613

(57) **Abstract**

The present disclosure relates to the technical field of communications. Provided are a model training method and apparatus, and a storage medium. The method comprises: a second entity sending a model training request message to a first entity; the first entity determining model-training-related information according to the model training request message, and sending a first indication message to a third entity; the third entity sending an execution operation request message to at least one sixth entity according to a target QoS index parameter list and an execution operation list; each sixth entity performing model training according to the execution operation request message, so as to obtain a model training result, and sending an execution operation response message to the third entity, wherein the execution operation response message comprises the model training result; the third entity sending a first response message to the first entity; and the first entity sending a second response message to the second entity, wherein the first response message and the second response message each comprise the model training result. By means of interaction among a plurality of entities, a communication system can provide a model training service for a user, a network or a third party as required.

## Description

### CROSS-REFERENCE TO RELATED APPLICATIONS

The present disclosure claims priority to Chinese Patent Application No. 202310652135.5, entitled "Model Training Method and Apparatus, and Storage Medium", filed with China National Intellectual Property Administration on June 1, 2023, the entire content of which is incorporated herein by reference.

### TECHNICAL FIELD

The present disclosure relates to the technical field of communications, and in particular, to a model training method and apparatus, and a storage medium.

### BACKGROUND

Endogenous intelligence of 6th generation (6G) mobile networks may mean that in the 6G networks, by natively supporting Artificial Intelligence (Al), an AI capability is taken as a basic service of the networks to implement AI as a Service (AlaaS), so that the networks can self-learn and self-evolve, and then can provide an AI model training service, an AI reasoning service, an AI deployment and open service, or the like, for users, networks or third parties.

Network architectures and network flows of existing mobile communication systems can provide connection and data transmission services for users, but cannot provide endogenous intelligence services such as the AI model training service.

### SUMMARY

The present disclosure provides a model training method and apparatus, and a storage medium, which solve the technical problem that a communication system cannot provide endogenous intelligence services such as an AI model training service.

In a first aspect, an embodiment of the present disclosure provides a model training method applied to a first entity, the method including:
receiving a model training request message sent by a second entity;
determining model-training-related information according to the model training request message, where the model-training-related information is configured for determining a target Quality of Service (QoS) parameter list and an execution operation list, and the execution operation list is configured for indicating execution operations of a plurality of entities in model training;
sending a first indication message to a third entity, where the first indication message includes the model-training-related information, or the first indication message includes the target QoS parameter list and the execution operation list;
receiving a first response message sent by the third entity, where the first response message includes a model training result; and
sending a second response message to the second entity, where the second response message includes the model training result.

In an embodiment, the model training request message includes at least one of: training duration, first model accuracy, first model complexity, first model inference overhead, a training data volume, a training data source, first model generalization, or an algorithm source.

In an embodiment, the model-training-related information includes at least one of: a resource type, a resource size, a training algorithm, or a training mode.

In an embodiment, the first indication message includes the target QoS parameter list and the execution operation list; and before sending the first indication message to the third entity, the method further includes:
acquiring the target QoS parameter list according to the model-training-related information;
acquiring network resource information from a fourth entity; and
determining the execution operation list according to the target QoS parameter list and the network resource information.

In an embodiment, acquiring the target QoS parameter list according to the model-training-related information includes:
determining a candidate QoS parameter list according to the model-training-related information;
sending the candidate QoS parameter list to a fifth entity, where the candidate QoS parameter list is configured for determining the target QoS parameter list; and
receiving the target QoS parameter list or a confirmation message sent by the fifth entity, where the confirmation message is configured for indicating that the candidate QoS parameter list is the target QoS parameter list.

In an embodiment, acquiring the target QoS parameter list according to the model-training-related information includes:
sending the model-training-related information to the fifth entity; and
receiving the target QoS parameter list sent by the fifth entity.

In an embodiment, the target QoS parameter list includes a target QoS parameter of the third entity and a target QoS parameter of at least one sixth entity, or the target QoS parameter list includes the target QoS parameter of the third entity.

In an embodiment, the target QoS parameter includes at least one of: a service index parameter, a resource index parameter, a transmission index parameter, or a collaboration index parameter;
the service index parameter includes at least one of: second model accuracy, second model generalization, second model complexity, or second model inference overhead;
the resource index parameter includes at least one of: the resource type, the resource size, a resource priority, or resource use duration;
the transmission index parameter includes at least one of: transmission reliability, a transmission delay, or a transmission bandwidth; and
the collaboration index parameter includes a collaboration type.

In an embodiment, the first indication message further includes a service identifier of model training, a plurality of indicators, and an identifier of an anchor network element, and the plurality of indicators are configured to indicate a current service stage and a next service stage;
the first response message further includes the service identifier and the plurality of indicators; and
the second response message further includes the service identifier and the plurality of indicators.

In an embodiment, the first entity is deployed at a first access network device or a first core network device;
the second entity is a first terminal device or the second entity is deployed at a second terminal device, a second access network device or a second core network device;
the third entity is a third terminal device or the third entity is deployed at a fourth terminal device, a third access network device or a third core network device;
the fourth entity is deployed at a fourth access network device or a fourth core network device;
the fifth entity is deployed at a fifth access network device or a fifth core network device;
each sixth entity is a fifth terminal device or each sixth entity is deployed at a sixth terminal device, a sixth access network device or a sixth core network device;
the first terminal device, the third terminal device and the fifth terminal device are the same or different, the second terminal device, the fourth terminal device and the sixth terminal device are the same or different, the first access network device, the second access network device, the third access network device, the fourth access network device, the fifth access network device and the sixth access network device are the same or different, and the first core network device, the second core network device, the third core network device, the fourth core network device, the fifth core network device and the sixth core network device are the same or different.

In a second aspect, an embodiment of the present disclosure provides a model training method applied to a third entity, the method including:
receiving a first indication message sent by a first entity, where the first indication message includes model-training-related information, or the first indication message includes a target Quality of Service (QoS) parameter list and an execution operation list, and the execution operation list is configured for indicating execution operations of a plurality of entities in model training;
sending an execution operation request message to at least one sixth entity according to the target QoS parameter list and the execution operation list, where the execution operation request message is configured for indicating the at least one sixth entity to perform model training;
receiving an execution operation response message sent by the at least one sixth entity; and
sending a first response message to the first entity, where the first response message includes a model training result.

In an embodiment, the model-training-related information includes at least one of: a resource type, a resource size, a training algorithm, or a training mode.

In an embodiment, the execution operation request message includes at least one of: a service identifier of model training, an identifier of a target sixth entity, a plurality of indicators, an execution operation of the target sixth entity, a training data volume, a training data source, or a target QoS parameter of the target sixth entity, and the plurality of indicators are configured for indicating a current service stage and a next service stage; and
the execution operation response message includes the service identifier of the model training, the identifier of the target sixth entity, the plurality of indicators and a model training result of the target sixth entity.

In an embodiment, the first indication message includes the model-training-related information; and before sending the execution operation request message to the at least one sixth entity, the method further includes:
acquiring the target QoS parameter list according to the model-training-related information;
acquiring network resource information from a fourth entity; and
determining the execution operation list according to the target QoS parameter list and the network resource information.

In an embodiment, acquiring the target QoS parameter list according to the model-training-related information includes:
determining a candidate QoS parameter list according to the model-training-related information;
sending the candidate QoS parameter list to a fifth entity, where the candidate QoS parameter list is configured for determining the target QoS parameter list; and
receiving the target QoS parameter list or a confirmation message sent by the fifth entity, where the confirmation message is configured for indicating that the candidate QoS parameter list is the target QoS parameter list.

In an embodiment, acquiring the target QoS parameter list according to the model-training-related information includes:
sending the model-training-related information to the fifth entity; and
receiving the target QoS parameter list sent by the fifth entity.

In an embodiment, the target QoS parameter list includes a target QoS parameter of the third entity and a target QoS parameter of the at least one sixth entity.

In an embodiment, the first indication message includes the target QoS parameter list, the execution operation list, and an identifier of the at least one sixth entity, the target QoS parameter list includes the target QoS parameter of the third entity, and the execution operation list includes an execution operation of the third entity; and
sending the execution operation request message to the at least one sixth entity according to the target QoS parameter list and the execution operation list includes:
acquiring the target QoS parameter of the at least one sixth entity according to the target QoS parameter of the third entity and the identifier of the at least one sixth entity;
acquiring network resource information from a fourth entity;
determining an execution operation of each sixth entity according to the target QoS parameter of the at least one sixth entity and the network resource information; and
sending the execution operation request message to each sixth entity, where the execution operation request message includes the target QoS parameter of each sixth entity and the execution operation of each sixth entity.

In an embodiment, acquiring the target QoS parameter of the at least one sixth entity includes:
determining at least one candidate QoS parameter according to the target QoS parameter of the third entity and the identifier of the at least one sixth entity;
sending the at least one candidate QoS parameter to the fifth entity, where the at least one candidate QoS parameter is configured for determining the target QoS parameter of the at least one sixth entity; and
receiving the target QoS parameter of the at least one sixth entity or a confirmation message sent by the fifth entity, where the confirmation message is configured for indicating that the at least one candidate QoS parameter is the target QoS parameter of the at least one sixth entity.

In an embodiment, acquiring the target QoS parameter of the at least one sixth entity includes:
sending the target QoS parameter of the third entity and the identifier of the at least one sixth entity to the fifth entity, where the target QoS parameter of the third entity is configured for determining the target QoS parameter of the at least one sixth entity; and
receiving the target QoS parameter of the at least one sixth entity sent by the fifth entity.

In an embodiment, the target QoS parameter includes at least one of: a service index parameter, a resource index parameter, a transmission index parameter, or a collaboration index parameter;
the service index parameter includes at least one of: second model accuracy, second model generalization, second model complexity, or second model inference overhead;
the resource index parameter includes at least one of: the resource type, the resource size, a resource priority, or resource use duration;
the transmission index parameter includes at least one of: transmission reliability, a transmission delay, or a transmission bandwidth; and
the collaboration index parameter includes a collaboration type.

In an embodiment, the method further includes:
receiving feedback information from the at least one sixth entity;
sending a second indication message to the at least one sixth entity according to the feedback information, where the second indication message is configured for indicating the sixth entity to perform model updating or resource collaboration adjustment; and
receiving a third response message sent by the at least one sixth entity.

In an embodiment, the first entity is deployed at a first access network device or a first core network device;
the third entity is a third terminal device or the third entity is deployed at a fourth terminal device, a third access network device or a third core network device;
the fifth entity is deployed at a fifth access network device or a fifth core network device;
each sixth entity is a fifth terminal device or each sixth entity is deployed at a sixth terminal device, a sixth access network device or a sixth core network device;
the third terminal device and the fifth terminal device are the same or different, the fourth terminal device and the sixth terminal device are the same or different, the first access network device, the third access network device, the fifth access network device and the sixth access network device are the same or different, and the first core network device, the third core network device, the fifth core network device and the sixth core network device are the same or different.

In a third aspect, an embodiment of the present disclosure provides a model training method applied to a sixth entity, the method including:
receiving an execution operation request message sent by a third entity;
performing model training according to the execution operation request message, so as to obtain a model training result; and
sending an execution operation response message to the third entity, where the execution operation response message includes the model training result.

In an embodiment, the execution operation request message includes at least one of: a service identifier of model training, an identifier of a target sixth entity, a plurality of indicators, an execution operation of the target sixth entity, a training data volume, a training data source, or a target Quality of Service (QoS) parameter of the target sixth entity, and the plurality of indicators are configured for indicating a current service stage and a next service stage; and
the execution operation response message further includes the service identifier of the model training, an identifier of the sixth entity, and the plurality of indicators.

In an embodiment, the method further includes:
sending feedback information to the third entity;
receiving a second indication message sent by the third entity, where the second indication message is configured for indicating the sixth entity to perform model updating or resource collaboration adjustment; and
sending a third response message to the third entity.

In an embodiment, the third entity is a third terminal device or the third entity is deployed at a fourth terminal device, a third access network device or a third core network device;
each sixth entity is a fifth terminal device or each sixth entity is deployed at a sixth terminal device, a sixth access network device or a sixth core network device;
the third terminal device and the fifth terminal device are the same or different, the fourth terminal device and the sixth terminal device are the same or different, the third access network device and the sixth access network device are the same or different, and the third core network device and the sixth core network device are the same or different.

In a fourth aspect, an embodiment of the present disclosure provides a model training method applied to a second entity, the method including:
sending a model training request message to a first entity; and
receiving a second response message sent by the first entity, where the second response message includes a model training result.

In an embodiment, the model training request message includes at least one of: training duration, first model accuracy, first model complexity, first model inference overhead, a training data volume, a training data source, first model generalization, or an algorithm source.

In an embodiment, the second response message further includes a service identifier of model training and a plurality of service procedure indicators, and the plurality of indicators are configured for indicating a current service stage and a next service stage.

In an embodiment, the first entity is deployed at a first access network device or a first core network device;
the second entity is a first terminal device or the second entity is deployed at a second terminal device, a second access network device or a second core network device;
the first access network device and the second access network device are the same or different, and the first core network device and the second core network device are the same or different.

In a fifth aspect, an embodiment of the present disclosure provides a model training apparatus applied to a first entity, the apparatus including:
a first receiving unit configured to receive a model training request message sent by a second entity;
a first determining unit configured to determine model-training-related information according to the model training request message, where the model-training-related information is configured for determining a target Quality of Service (QoS) parameter list and an execution operation list, and the execution operation list is configured for indicating execution operations of a plurality of entities in model training;
a first sending unit configured to send a first indication message to a third entity, where the first indication message includes the model-training-related information, or the first indication message includes the target QoS parameter list and the execution operation list;
a second receiving unit configured to receive a first response message sent by the third entity, where the first response message includes a model training result; and
a second sending unit configured to send a second response message to the second entity, where the second response message includes the model training result.

In an embodiment, the model training request message includes at least one of: training duration, first model accuracy, first model complexity, first model inference overhead, a training data volume, a training data source, first model generalization, or an algorithm source.

In an embodiment, the model-training-related information includes at least one of: a resource type, a resource size, a training algorithm, or a training mode.

In an embodiment, the first indication message includes the target QoS parameter list and the execution operation list; and the apparatus further includes:
a first acquiring unit configured to acquire the target QoS parameter list according to the model-training-related information;
a second acquiring unit configured to acquire network resource information from a fourth entity; and
a second determining unit configured to determine the execution operation list according to the target QoS parameter list and the network resource information.

In an embodiment, the first acquiring unit is specifically configured to:
determine a candidate QoS parameter list according to the model-training-related information;
send the candidate QoS parameter list to a fifth entity, where the candidate QoS parameter list is configured for determining the target QoS parameter list; and
receive the target QoS parameter list or a confirmation message sent by the fifth entity, where the confirmation message is configured for indicating that the candidate QoS parameter list is the target QoS parameter list.

In an embodiment, the first acquiring unit is specifically configured to:
send the model-training-related information to the fifth entity; and
receive the target QoS parameter list sent by the fifth entity.

In an embodiment, the target QoS parameter list includes a target QoS parameter of the third entity and a target QoS parameter of at least one sixth entity, or the target QoS parameter list includes the target QoS parameter of the third entity.

In an embodiment, the target QoS parameter includes at least one of: a service index parameter, a resource index parameter, a transmission index parameter, or a collaboration index parameter;
the service index parameter includes at least one of: second model accuracy, second model generalization, second model complexity, or second model inference overhead;
the resource index parameter includes at least one of: the resource type, the resource size, a resource priority and resource use duration;
the transmission index parameter includes at least one of: transmission reliability, a transmission delay, or a transmission bandwidth; and
the collaboration index parameter includes a collaboration type.

In an embodiment, the first indication message further includes a service identifier of model training, a plurality of indicators, and an identifier of an anchor network element, and the plurality of indicators are configured to indicate a current service stage and a next service stage;
the first response message further includes the service identifier and the plurality of indicators; and
the second response message further includes the service identifier and the plurality of indicators.

In a sixth aspect, an embodiment of the present disclosure provides a model training apparatus applied to a third entity, the apparatus including:
a first receiving unit configured to receive a first indication message sent by a first entity, where the first indication message includes model-training-related information, or the first indication message includes a target Quality of Service (QoS) index parameter list and an execution operation list, and the execution operation list is configured for indicating execution operations of a plurality of entities in model training;
a first sending unit configured to send an execution operation request message to at least one sixth entity according to the target QoS parameter list and the execution operation list, where the execution operation request message is configured for indicating the at least one sixth entity to perform model training;
a second receiving unit configured to receive an execution operation response message sent by the at least one sixth entity; and
a second sending unit configured to send a first response message to the first entity, where the first response message includes a model training result.

In an embodiment, the model-training-related information includes at least one of: a resource type, a resource size, a training algorithm, or a training mode.

In an embodiment, the execution operation request message includes at least one of: a service identifier of model training, an identifier of a target sixth entity, a plurality of indicators, an execution operation of the target sixth entity, a training data volume, a training data source, or a target QoS parameter of the target sixth entity, and the plurality of indicators are configured for indicating a current service stage and a next service stage; and
the execution operation response message includes the service identifier of the model training, the identifier of the target sixth entity, the plurality of indicators and a model training result of the target sixth entity.

In an embodiment, the first indication message includes the model-training-related information; and the apparatus further includes:
a first acquiring unit configured to acquire the target QoS parameter list according to the model-training-related information;
a second acquiring unit configured to acquire network resource information from a fourth entity; and
a determining unit configured to determine the execution operation list according to the target QoS parameter list and the network resource information.

In an embodiment, the first acquiring unit is specifically configured to:
determine a candidate QoS parameter list according to the model-training-related information;
send the candidate QoS parameter list to a fifth entity, where the candidate QoS parameter list is configured for determining the target QoS parameter list; and
receive the target QoS parameter list or a confirmation message sent by the fifth entity, where the confirmation message is configured for indicating that the candidate QoS parameter list is the target QoS parameter list.

In an embodiment, the first acquiring unit is specifically configured to:
send the model-training-related information to the fifth entity; and
receive the target QoS parameter list sent by the fifth entity.

In an embodiment, the target QoS parameter list includes a target QoS parameter of the third entity and a target QoS parameter of the at least one sixth entity.

In an embodiment, the first indication message includes the target QoS parameter list, the execution operation list, and an identifier of the at least one sixth entity, the target QoS parameter list includes the target QoS parameter of the third entity, and the execution operation list includes an execution operation of the third entity;
the first acquiring unit is further configured to acquire the target QoS parameter of the at least one sixth entity according to the target QoS parameter of the third entity and the identifier of the at least one sixth entity;
the second acquiring unit is configured to acquire the network resource information from the fourth entity;
the determining unit is further configured to determine an execution operation of each sixth entity according to the target QoS parameter of the at least one sixth entity and the network resource information; and
the first sending unit is further configured to send the execution operation request message to each sixth entity, where the execution operation request message includes the target QoS parameter and the execution operation of each sixth entity.

In an embodiment, the first acquiring unit is specifically configured to:
determine at least one candidate QoS parameter according to the target QoS parameter of the third entity and the identifier of the at least one sixth entity;
send the at least one candidate QoS parameter to the fifth entity, where the at least one candidate QoS parameter is configured to determine the target QoS parameter of the at least one sixth entity; and
receive the target QoS parameter of the at least one sixth entity or a confirmation message sent by the fifth entity, where the confirmation message is configured for indicating that the at least one candidate QoS parameter is the target QoS parameter of the at least one sixth entity.

In an embodiment, the first acquiring unit is specifically configured to:
send the target QoS parameter of the third entity and the identifier of the at least one sixth entity to the fifth entity, where the target QoS parameter of the third entity is configured for determining the target QoS parameter of the at least one sixth entity; and
receive the target QoS parameter of the at least one sixth entity sent by the fifth entity.

In an embodiment, the target QoS parameter includes at least one of: a service index parameter, a resource index parameter, a transmission index parameter, or a collaboration index parameter;
the service index parameter includes at least one of: second model accuracy, second model generalization, second model complexity, or second model inference overhead;
the resource index parameter includes at least one of: the resource type, the resource size, a resource priority, or resource use duration;
the transmission index parameter includes at least one of: transmission reliability, a transmission delay, or a transmission bandwidth; and
the collaboration index parameter includes a collaboration type.

In an embodiment, the apparatus further includes:
a third receiving unit configured to receive feedback information from the at least one sixth entity;
a third sending unit configured to send a second indication message to the at least one sixth entity according to the feedback information, where the second indication message is configured for indicating the sixth entity to perform model updating or resource collaboration adjustment; and
a fourth receiving unit configured to receive a third response message sent by the at least one sixth entity.

In a seventh aspect, an embodiment of the present disclosure provides a model training apparatus applied to a sixth entity, the apparatus including:
a first receiving unit configured to receive an execution operation request message sent by a third entity;
a model training unit configured to perform model training according to the execution operation request message, so as to obtain a model training result; and
a first sending unit configured to send an execution operation response message to the third entity, where the execution operation response message includes the model training result.

In an embodiment, the execution operation request message includes at least one of: a service identifier of model training, an identifier of a target sixth entity, a plurality of indicators, an execution operation of the target sixth entity, a training data volume, a training data source, or a target Quality of Service (QoS) parameter of the target sixth entity, and the plurality of indicators are configured for indicating a current service stage and a next service stage; and
the execution operation response message further includes the service identifier of the model training, an identifier of the sixth entity, and the plurality of indicators.

In an embodiment, the apparatus further includes:
a second sending unit configured to send feedback information to the third entity;
a second receiving unit configured to receive a second indication message sent by the third entity, where the second indication message is configured for indicating the sixth entity to perform model updating or resource collaboration adjustment; and
a third sending unit configured to send a third response message to the third entity.

In an eighth aspect, an embodiment of the present disclosure provides a model training apparatus applied to a second entity, the apparatus including:
a sending unit configured to send a model training request message to a first entity; and
a receiving unit configured to receive a second response message sent by the first entity, where the second response message includes a model training result.

In an embodiment, the model training request message includes at least one of: training duration, first model accuracy, first model complexity, first model inference overhead, a training data volume, a training data source, first model generalization, or an algorithm source.

In an embodiment, the second response message further includes a service identifier of model training and a plurality of service procedure indicators, and the plurality of indicators are configured for indicating a current service stage and a next service stage.

In a ninth aspect, an embodiment of the present disclosure provides a model training apparatus applied to a first entity, and the apparatus includes a memory, a transceiver, and a processor:
the memory is configured for storing a computer program; the transceiver is configured for transmitting and receiving data under control of the processor; and the processor is configured for reading the computer program in the memory and performing the following operations:
receiving a model training request message sent by a second entity;
determining model-training-related information according to the model training request message, where the model-training-related information is configured for determining a target Quality of Service (QoS) parameter list and an execution operation list, and the execution operation list is configured for indicating execution operations of a plurality of entities in model training;
sending a first indication message to a third entity, where the first indication message includes the model-training-related information, or the first indication message includes the target QoS parameter list and the execution operation list;
receiving a first response message sent by the third entity, where the first response message includes a model training result; and
sending a second response message to the second entity, where the second response message includes the model training result.

In an embodiment, the model training request message includes at least one of: training duration, first model accuracy, first model complexity, first model inference overhead, a training data volume, a training data source, first model generalization, or an algorithm source.

In an embodiment, the model-training-related information includes at least one of: a resource type, a resource size, a training algorithm, or a training mode.

In an embodiment, the first indication message includes the target QoS parameter list and the execution operation list; and the processor is further configured to perform the following operations:
acquiring the target QoS parameter list according to the model-training-related information;
acquiring network resource information from a fourth entity; and
determining the execution operation list according to the target QoS parameter list and the network resource information.

In an embodiment, the processor is specifically configured to perform the following operations:
determining a candidate QoS parameter list according to the model-training-related information;
sending the candidate QoS parameter list to a fifth entity, where the candidate QoS parameter list is configured for determining the target QoS parameter list; and
receiving the target QoS parameter list or a confirmation message sent by the fifth entity, where the confirmation message is configured for indicating that the candidate QoS parameter list is the target QoS parameter list.

In an embodiment, the processor is specifically configured to perform the following operations:
sending the model-training-related information to the fifth entity; and
receiving the target QoS parameter list sent by the fifth entity.

In an embodiment, the target QoS parameter list includes a target QoS parameter of the third entity and a target QoS parameter of at least one sixth entity, or the target QoS parameter list includes the target QoS parameter of the third entity.

In an embodiment, the target QoS parameter includes at least one of: a service index parameter, a resource index parameter, a transmission index parameter, and a collaboration index parameter;
the service index parameter includes at least one of: second model accuracy, second model generalization, second model complexity, or second model inference overhead;
the resource index parameter includes at least one of: the resource type, the resource size, a resource priority, or resource use duration;
the transmission index parameter includes at least one of: transmission reliability, a transmission delay, or a transmission bandwidth; and
the collaboration index parameter includes a collaboration type.

In an embodiment, the first indication message further includes a service identifier of model training, a plurality of indicators, and an identifier of an anchor network element, and the plurality of indicators are configured to indicate a current service stage and a next service stage;
the first response message further includes the service identifier and the plurality of indicators; and
the second response message further includes the service identifier and the plurality of indicators.

In a tenth aspect, an embodiment of the present disclosure provides a model training apparatus applied to a third entity, and the apparatus includes a memory, a transceiver, and a processor:
the memory is configured for storing a computer program; the transceiver is configured for transmitting and receiving data under control of the processor; and the processor is configured for reading the computer program in the memory and performing the following operations:
receiving a first indication message sent by a first entity, where the first indication message includes model-training-related information, or the first indication message includes a target Quality of Service (QoS) parameter list and an execution operation list, and the execution operation list is configured for indicating execution operations of a plurality of entities in model training;
sending an execution operation request message to at least one sixth entity according to the target QoS parameter list and the execution operation list, where the execution operation request message is configured for indicating the at least one sixth entity to perform model training;
receiving an execution operation response message sent by the at least one sixth entity; and
sending a first response message to the first entity, where the first response message includes a model training result.

In an embodiment, the model-training-related information includes at least one of: a resource type, a resource size, a training algorithm, or a training mode.

In an embodiment, the execution operation request message includes at least one of: a service identifier of model training, an identifier of a target sixth entity, a plurality of indicators, an execution operation of the target sixth entity, a training data volume, a training data source, or a target QoS parameter of the target sixth entity, and the plurality of indicators are configured for indicating a current service stage and a next service stage; and
the execution operation response message includes the service identifier of the model training, the identifier of the target sixth entity, the plurality of indicators, and a model training result of the target sixth entity.

In an embodiment, the first indication message includes the model-training-related information; and the processor is further configured to perform the following operations:
acquiring the target QoS parameter list according to the model-training-related information;
acquiring network resource information from a fourth entity; and
determining the execution operation list according to the target QoS parameter list and the network resource information.

In an embodiment, the processor is specifically configured to perform the following operations:
determining a candidate QoS parameter list according to the model-training-related information;
sending the candidate QoS parameter list to a fifth entity, where the candidate QoS parameter list is configured for determining the target QoS parameter list; and
receiving the target QoS parameter list or a confirmation message sent by the fifth entity, where the confirmation message is configured for indicating that the candidate QoS parameter list is the target QoS parameter list.

In an embodiment, the processor is specifically configured to perform the following operations:
sending the model-training-related information to the fifth entity; and
receiving the target QoS parameter list sent by the fifth entity.

In an embodiment, the target QoS parameter list includes a target QoS parameter of the third entity and a target QoS parameter of the at least one sixth entity.

In an embodiment, the first indication message includes the target QoS parameter list, the execution operation list, and an identifier of the at least one sixth entity, the target QoS parameter list includes the target QoS parameter of the third entity, and the execution operation list includes an execution operation of the third entity; and the processor is further configured to perform the following operations:
acquiring the target QoS parameter of the at least one sixth entity according to the target QoS parameter of the third entity and the identifier of the at least one sixth entity;
acquiring network resource information from a fourth entity;
determining an execution operation of each sixth entity according to the target QoS parameter of the at least one sixth entity and the network resource information; and
sending the execution operation request message to each sixth entity, where the execution operation request message includes the target QoS parameter and the execution operation of each sixth entity.

In an embodiment, the processor is specifically configured to perform the following operations:
determining at least one candidate QoS parameter according to the target QoS parameter of the third entity and the identifier of the at least one sixth entity;
sending the at least one candidate QoS parameter to the fifth entity, where the at least one candidate QoS parameter is configured to determine the target QoS parameter of the at least one sixth entity; and
receiving the target QoS parameter of the at least one sixth entity or a confirmation message sent by the fifth entity, where the confirmation message is configured for indicating that the at least one candidate QoS parameter is the target QoS parameter of the at least one sixth entity.

In an embodiment, the processor is specifically configured to perform the following operations:
sending the target QoS parameter of the third entity and the identifier of the at least one sixth entity to the fifth entity, where the target QoS parameter of the third entity is configured for determining the target QoS parameter of the at least one sixth entity; and
receiving the target QoS parameter of the at least one sixth entity sent by the fifth entity.

In an embodiment, the target QoS parameter includes at least one of: a service index parameter, a resource index parameter, a transmission index parameter, or a collaboration index parameter;
the service index parameter includes at least one of: second model accuracy, second model generalization, second model complexity, or second model inference overhead;
the resource index parameter includes at least one of: the resource type, the resource size, a resource priority, or resource use duration;
the transmission index parameter includes at least one of: transmission reliability, a transmission delay, or a transmission bandwidth; and
the collaboration index parameter includes a collaboration type.

In an embodiment, the processor is further configured to perform the following operations:
receiving feedback information from the at least one sixth entity;
sending a second indication message to the at least one sixth entity according to the feedback information, where the second indication message is configured for indicating the sixth entity to perform model updating or resource collaboration adjustment; and
receiving a third response message sent by the at least one sixth entity.

In an eleventh aspect, an embodiment of the present disclosure provides a model training apparatus applied to a sixth entity, and the apparatus includes a memory, a transceiver, and a processor:
the memory is configured for storing a computer program; the transceiver is configured for transmitting and receiving data under control of the processor; and the processor is configured for reading the computer program in the memory and performing the following operations:
receiving an execution operation request message sent by a third entity;
performing model training according to the execution operation request message, so as to obtain a model training result; and
sending an execution operation response message to the third entity, where the execution operation response message includes the model training result.

In an embodiment, the execution operation request message includes at least one of: a service identifier of model training, an identifier of a target sixth entity, a plurality of indicators, an execution operation of the target sixth entity, a training data volume, a training data source, or a target Quality of Service (QoS) parameter of the target sixth entity, and the plurality of indicators are configured for indicating a current service stage and a next service stage; and
the execution operation response message further includes the service identifier of the model training, an identifier of the sixth entity, and the plurality of indicators.

In an embodiment, the processor is further configured to perform the following operations:
sending feedback information to the third entity;
receiving a second indication message sent by the third entity, where the second indication message is configured for indicating the sixth entity to perform model updating or resource collaboration adjustment; and
sending a third response message to the third entity.

In a twelfth aspect, an embodiment of the present disclosure provides a model training apparatus applied to a second entity, and the apparatus includes a memory, a transceiver, and a processor:
the memory is configured for storing a computer program; the transceiver is configured for transmitting and receiving data under control of the processor; and the processor is configured for reading the computer program in the memory and performing the following operations:
sending a model training request message to a first entity; and
receiving a second response message sent by the first entity, where the second response message includes a model training result.

In an embodiment, the model training request message includes at least one of: training duration, first model accuracy, first model complexity, first model inference overhead, a training data volume, a training data source, first model generalization, or an algorithm source.

In an embodiment, the second response message further includes a service identifier of model training and a plurality of service procedure indicators, and the plurality of indicators are configured for indicating a current service stage and a next service stage.

In a thirteenth aspect, an embodiment of the present disclosure provides a non-transitory readable storage medium storing a computer program for causing a processor to perform the method of any item of the first aspect.

In a fourteenth aspect, an embodiment of the present disclosure provides a non-transitory readable storage medium storing a computer program for causing a processor to perform the method of any item of the second aspect.

In a fifteenth aspect, an embodiment of the present disclosure provides a non-transitory readable storage medium storing a computer program for causing a processor to perform the method of any item of the third aspect.

In a sixteenth aspect, an embodiment of the present disclosure provides a non-transitory readable storage medium storing a computer program for causing a processor to perform the method of any item of the fourth aspect.

The present disclosure provides the model training method and apparatus, and the storage medium, and in the model training method, a closed-loop model training procedure is constructed through interaction among all the entities in the communication system, so that the communication system can provide the model training service for a user, a network or a third party on demand.

It should be understood that the content described in the summary above is not intended to limit key or critical features of embodiments of the present invention, nor is it intended to limit the scope of the present invention. Other features of the present invention will become apparent from the following description.

### BRIEF DESCRIPTION OF THE DRAWINGS

In order to illustrate the technical solutions in the present disclosure or the prior art more clearly, the drawings required for describing the embodiments or the prior art will be described briefly. Apparently, the following described drawings are for some embodiments of the present invention, and other drawings can be derived from these drawings by those of ordinary skill in the art without any creative effort.
FIG. 1 is a schematic architecture diagram of a communication system in the related art;
FIG. 2 is a schematic architecture diagram of a communication system according to an embodiment of the present disclosure;
FIG. 3 is a flowchart of a model training method according to an embodiment of the present disclosure;
FIG. 4 is a flowchart of another model training method according to an embodiment of the present disclosure;
FIG. 5 is a flowchart of still another model training method according to an embodiment of the present disclosure;
FIG. 6 is a flowchart of yet another model training method according to an embodiment of the present disclosure;
FIG. 7 is a flowchart of an interaction method according to an embodiment of the present disclosure;
FIG. 8 is a schematic structural diagram of a model training apparatus 800 according to an embodiment of the present disclosure;
FIG. 9A is a schematic structural diagram of a model training apparatus 900 according to an embodiment of the present disclosure;
FIG. 9B is another schematic structural diagram of the model training apparatus 900 according to the embodiment of the present disclosure;
FIG. 10A is a schematic structural diagram of a model training apparatus 1000 according to an embodiment of the present disclosure;
FIG. 10B is another schematic structural diagram of the model training apparatus 1000 according to the embodiment of the present disclosure;
FIG. 11A is a schematic structural diagram of a model training apparatus 1100 according to an embodiment of the present disclosure;
FIG. 11B is another schematic structural diagram of the model training apparatus 1100 according to the embodiment of the present disclosure;
FIG. 12 is a schematic structural diagram of a model training apparatus 1200 according to an embodiment of the present disclosure;
FIG. 13 is a schematic structural diagram of a model training apparatus 1300 according to an embodiment of the present disclosure;
FIG. 14 is a schematic structural diagram of a model training apparatus 1400 according to an embodiment of the present disclosure; and
FIG. 15 is a schematic structural diagram of a model training apparatus 1500 according to an embodiment of the present disclosure.

### DETAILED DESCRIPTION

In the embodiments of the present invention, the term "and/or" describes an association relationship between associated objects, and it indicates that three relationships may exist. For example, A and/or B may indicate three cases: only A exists; both A and B exist; and only B exists. The symbol "/" generally indicates that associated objects have a relationship of "or".

The term "a plurality of" in the embodiments of the present disclosure means two or more, and other quantifiers are similar thereto.

The technical solutions in the embodiments of the present disclosure are clearly and completely described with reference to the accompanying drawings in the embodiments of the present disclosure, and apparently, the described embodiments are not all but only a part of the embodiments of the present disclosure. All other embodiments obtained by a person of ordinary skill in the art based on the embodiments of the present disclosure without creative efforts shall fall within the protection scope of the present disclosure.

The embodiments of the present disclosure provide a model training method and apparatus, which are configured for providing a model training service for users on demand.

The method and the apparatus are based on the same application concept, and since the principles by which the method and the apparatus solve problems are similar, mutual reference may be made for the implementations of the apparatus and the method, and repeated parts are not repeated.

The terminal device involved in the embodiments of the present disclosure may be a device providing voice and/or data connectivity for a user, a handheld device having a wireless connection function, or other processing devices connected to a wireless modem, etc. The name of the terminal device may be different in different systems. For example, in a 5th generation (5G) communication system, the terminal device may be referred to as User Equipment (UE). A wireless terminal device may be communicated with one or more Core Networks (CNs) via a Radio Access Network (RAN), and the wireless terminal device may be a mobile terminal device such as a mobile telephone (or referred to as a "cellular" phone) and a computer having a mobile terminal device, e.g., a portable mobile apparatus, pocket-sized mobile apparatus, handheld mobile apparatus, computer built-in mobile apparatus or vehicle-mounted mobile apparatus, which exchanges voice and/or data with the RAN. For example, the wireless terminal device may be a Personal Communication Service (PCS) phone, a cordless phone, a Session Initiation Protocol (SIP) phone, a Wireless Local Loop (WLL) station, a Personal Digital Assistants (PDA), or the like. The wireless terminal device may also be referred to as a system, a subscriber unit, a subscriber station, a mobile station, a mobile, a remote station, an access point, a remote terminal, an access terminal, a user terminal, a user agent, and a user device, which is not limited in the embodiments of the present disclosure.

The access network device involved in the embodiments of the present disclosure may be a base station, and the base station may include a plurality of cells that provide service for terminals. Depending on particular application scenarios, the base station may also be referred to as an access point, a device in an access network that is communicated with the wireless terminal device over an air interface through one or more sectors, or other names. The access network device may be configured to perform inter-conversion between a received air frames with Internet Protocol (IP) packets and serve as a router between the wireless terminal device and the rest of the access network. The rest of the access network may include an IP communications network. The access network device may also coordinate attribute management for the air interface. For example, the access network device as referred to in the embodiments of the present disclosure may be an access network device (Base Transceiver Station, BTS) in the Global System for Mobile communications (GSM) or Code Division Multiple Access (CDMA), an access network device (NodeB) in Wide-band Code Division Multiple Access (WCDMA), an evolved access network device (evolutional Node B, eNB or e-NodeB) in a long term evolution (LTE) system, a 5G base station (gNB) in a 5G network architecture (next generation system), a home evolved base station (Home evolved Node B, HeNB), a relay node, a home base station (femto), a pico base station (pico), or the like, which is not limited in the embodiment of the present disclosure. In some network structures, the access network device may include centralized unit (CU) nodes and distributed unit (DU) nodes, and the centralized units and the distributed units may be geographically separated

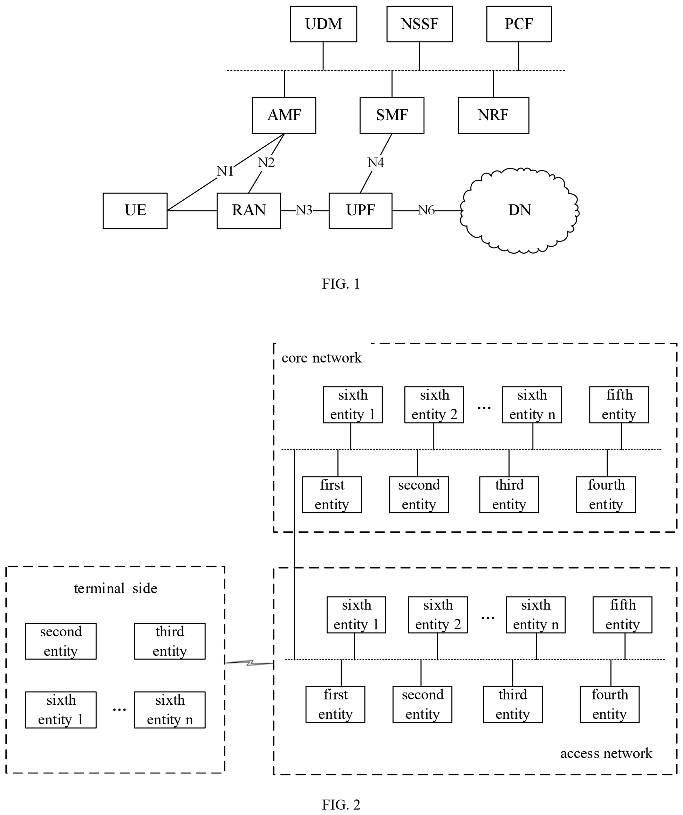

FIG. 1 is a schematic architecture diagram of a communication system in the related art. As shown in FIG. 1, the architecture includes a terminal device, an access network device, a core network device, and a data network (DN) part.

The core network device may also be referred to as a core network element or a core network function entity. As an example, the core network function entity may include any one of the following: a Policy Control Function (PCF) entity, a Network Slice Selection Function (NSSF) entity, a Unified Data Management (UDM) entity, a Network Repository Function (NRF) entity, a Session Management Function (SMF) entity, an Access and Mobility Management function (AMF) entity, and a User Plane Function (UPF) entity. As an example, the functions of the function entities described above are as follows.

The PCF entity is a unified policy framework mainly configured to guide network behaviors, and provides policy rule information, or the like, for a control plane entity (e.g., AMF, SMF, etc.).

The AMF entity is mainly configured for functions of access control, mobility management, registration, de-registration, or the like.

The SMF entity is mainly configured for user plane network element selection, user plane network element redirection, IP address allocation for terminal devices, as well as establishment, modification and release of sessions, and Quality of Service (QoS) control.

The UPF entity is mainly configured for the reception and forwarding of user plane data. For example, the UPF entity may receive user plane data from a service server and send the user plane data to the terminal device through the access network device. The UPF entity may also receive user plane data from the terminal device through the access network device and forward the user plane data to the service server.

The NSSF entity is mainly configured for network slice selection.

The UDM entity is mainly configured for subscription data management of the terminal device, including storage and management of an identifier of the terminal device, access authorization of the terminal device, or the like.

The data network part may be a data network that provides services for users, and generally, a client is located at the terminal device, and a server is located at the data network. The data network may be a private network such as a local area network, an external network not controlled by an operator such as the internet, or a proprietary network co-deployed by operators.

A network architecture of a current 5G mobile communication system may be as shown in FIG. 1, and similar to previous generations of mobile communication systems, the current 5G mobile communication system is designed with a focus on connection and data transmission, providing connection and data transmission services for users. However, it cannot provide endogenous intelligence services such as a model training service, and cannot guarantee QoS requirements of the model training service.

Based on the technical problems in the prior art, the embodiments of the present disclosure provide a model training method, which can construct a closed-loop model training process through interaction among a plurality of entities in a communication system, so that the communication system can provide the model training service for users, networks or third parties on demand.

In the embodiment of the present disclosure, providing the model training service through the communication system may mean that a model training process is completed through the interaction among the plurality of entities in the communication system. The model training service may refer to the entire model training process.

FIG. 2 is a schematic architecture diagram of a communication system according to an embodiment of the present disclosure. As shown in FIG. 2, the architecture includes a first entity, a second entity, a third entity, a fourth entity, a fifth entity, and at least one sixth entity.

The second entity is mainly configured to determine a service requirement.

Exemplarily, the second entity can determine the service requirement by receiving a request from a user. The second entity can also sense a change of a scene requirement and determine the service requirement by analyzing sensing data. The second entity can also analyze current data/third party data and historical data via AI algorithms to determine the service requirement.

The second entity may be referred to as a Require Analysing Function (RAF) entity.

The first entity may be configured to determine an execution operation list of a target service according to the service requirement.

The first entity may be referred to as a Network Adaptability Function (NAF) entity.

The third entity may be configured to coordinate execution schedules, functions, and/or resources of the at least one sixth entity, and may also be configured to determine the execution operation list of the target service.

The third entity may be referred to as a Network Collaboration Function (NCF) entity.

The fourth entity may be configured to register a network resource and receive an update of a status of the network function resource.

The fourth entity may be referred to as a Network-resource Registration and Collection Function (NRCF) entity.

The fifth entity may be configured to generate a QoS parameter, and store QoS parameters generated by other network elements.

The fifth entity may be referred to as a Network Service Policy Function (NSPF) entity.

Each sixth entity may be configured to implement a type of function such as control plane network functions, user plane network functions, data plane network functions, computing network functions, etc. That is, the sixth entity can perform a single network service operation such as connection establishment, data computation, etc., and it can also perform a collaboration operation to complete provision of a complex service such as establishment of a subnet, joint AI training, etc. In other words, an execution of one service may be performed by a single sixth entity or collaboratively performed by multiple sixth entities.

The sixth entity may be referred to as a Network Execution Function (NEF) entity.

The first entity may be deployed in an access network or a core network. The second entity may be a first terminal device, or the second entity may be deployed in a second terminal device, the access network, or the core network. The third entity may be a third terminal device, or the third entity may be deployed in a fourth terminal device, the access network, or the core network. The fourth entity may be deployed in the access network or the core network. The fifth body may be deployed in the access network or the core network. Each sixth entity may be a fifth terminal device, or each sixth entity may be deployed in a sixth terminal device, the access network, or the core network.

When the second entity is the first terminal device, the first terminal device has all functions of the second entity, and all the functions of the second entity can be achieved by software.

Deployment of the second entity at the second terminal device may mean that the second entity may be deployed in the second terminal device as a hardware apparatus, the second terminal device has all the functions of the second entity, and all the functions of the second entity may be achieved by hardware, or may be achieved by a combination of software and hardware.

When the third entity is the third terminal device, the third terminal device has all functions of the third entity, and all the functions of the third entity can be achieved by software.

Deployment of the third entity at the fourth terminal device may mean that the third entity is deployed in the fourth terminal device as a hardware apparatus, the fourth terminal device has all the functions of the third entity, and all the functions of the third entity may be achieved by hardware, or by a combination of software and hardware.

When the sixth entity is the fifth terminal device, the fifth terminal device has all functions of the sixth entity, and all the functions of the sixth entity may be achieved by software.

Deployment of the sixth entity at the sixth terminal device may mean that the sixth entity may be deployed in the sixth terminal device as a hardware apparatus, the sixth terminal device has all the functions of the sixth entity, and all the functions of the sixth entity may be achieved by hardware, or may be achieved by a combination of software and hardware.

In a possible implementation, the first entity, the second entity, the third entity, the fourth entity, the fifth entity, and the at least one sixth entity may all be deployed in the access network, may all be deployed in the core network, or may be respectively deployed in at least two of the terminal device, the access network device or the core network device.

In other words, the first entity is deployed in a first access network device or a first core network device; the second entity is the first terminal device or the second entity is deployed in the second terminal device, a second access network device or a second core network device; the third entity is the third terminal device or the third entity is deployed in the fourth terminal device, a third access network device or a third core network device; the fourth entity is deployed in a fourth access network device or a fourth core network device; the fifth entity is deployed in a fifth access network device or a fifth core network device; each sixth entity is the fifth terminal device or each sixth entity is deployed in the sixth terminal device, a sixth access network device or a sixth core network device. The first terminal device, the third terminal device and the fifth terminal device are the same or different. The second terminal device, the fourth terminal device and the sixth terminal device are the same or different. The first access network device, the second access network device, the third access network device, the fourth access network device, the fifth access network device and the sixth access network device are the same or different. The first core network device, the second core network device, the third core network device, the fourth core network device, the fifth core network device and the sixth core network device are the same or different.

Exemplarily, the second entity may be a terminal device, and the first entity, the third entity, the fourth entity, the fifth entity, and the at least one sixth entity may be deployed in different devices of a core network respectively.

For another example, the second entity may be deployed in a terminal device, and the first entity, the third entity, the fourth entity, the fifth entity, and the at least one sixth entity may be deployed in different devices of a core network respectively.

For another example, the second entity may be deployed in an access network, and the first entity, the third entity, the fourth entity, the fifth entity, and the at least one sixth entity may be deployed in different devices of a core network respectively.

For another example, the first entity, the second entity, the third entity, the fourth entity, the fifth entity, and the at least one sixth entity may be deployed in different devices of a core network respectively.

For another example, the second entity may be deployed in a terminal device, the first entity and the fifth entity may be deployed in different devices of an access network, and the third entity, the fourth entity and the at least one sixth entity may be deployed in different devices of a core network respectively.

For another example, the second entity may be a terminal device, the first entity and the sixth entity 1 may be deployed in the same device of an access network, and the third entity, the fourth entity, the fifth entity and the sixth entity 2 may be deployed in different devices of a core network respectively.

For another example, the second entity may be deployed in a terminal device 1, the sixth entity 2 may be deployed in a terminal device 2, the first entity, the fourth entity, and the sixth entity 1 may be deployed in different devices of an access network respectively, and the third entity, the fifth entity, and the sixth entity 3 may be deployed in different devices of a core network respectively.

Deployment of the entity in the access network may mean that the entity is deployed in a base station. Deployment of the entity in the core network may mean that the entity is deployed in an existing function entity such as a Network Function (NF) entity or an Operation Administration and Maintenance (OAM) entity, or the entity may be deployed in the core network as a single device.

The architecture of the communication system according to the embodiments of the present disclosure not only includes the above entities but may also include other function entities such as the PCF entity, the AMF entity, the SMF entity, and/or the UPF entity, which are not limited in the embodiments of the present disclosure.

On the basis of the above communication system architecture, how a plurality of entities in the architecture interact to implement on-demand providing of the model training service is described in detail below.

Model training in the embodiments of the present disclosure may refer to AI model training.

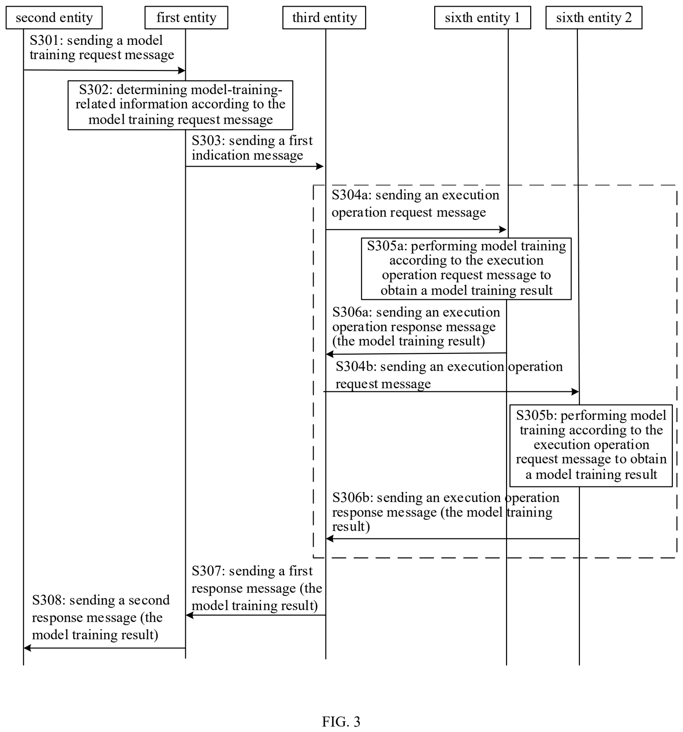

FIG. 3 is a flowchart of a model training method according to an embodiment of the present disclosure. As shown in FIG. 3, the method includes S301 to S308.

In S301, a second entity sends a model training request message to a first entity.

In other words, the first entity receives the model training request message sent by the second entity.

The second entity may send the model training request message to the first entity when determining that a user, network, or third party has a model training requirement.

Exemplarily, the second entity can determine the model training requirement by receiving a request sent by the user, or determine the model training requirement by analyzing sensing data, or analyze current data and historical data by an AI algorithm to determine the model training requirement, where the current data and the historical data may be device data, network data, or third party data.

In a possible implementation, the model training request message may include: an identifier of the second entity, a plurality of indicators of a model, a service type of a target service, and requirement information of the target service.

The identifier of the second entity may be an identity of the second entity.

Exemplarily, if the second entity is a terminal device, the identifier of the second entity may be a Subscription Permanent Identifier (SUPI), a Subscription Concealed Identifier (SUCI), an Access and Mobility Management Function User Equipment NG Application Protocol Identifier (AMF UE NGAP ID), or a Radio Access Network User Equipment NG Application Protocol Identifier (RAN UE NGAP ID).

The plurality of indicators may be configured to indicate a current service stage and a next service stage.

Exemplarily, the plurality of indicators may include a current Service Procedure Indicator (SPI) and a Next-step Service Procedure Indicator (NSPI). The SPI may be configured to indicate the current service stage and the NSPI may be configured to indicate the next service stage.

The current service stage may refer to an operation that the communication system should currently perform in the process of providing the model training service, and the next service stage may refer to an operation that the communication system should perform next in the process of providing the target service.

The communication system may go through the following stages throughout the process of providing the model training service: a Require Analysing (RA) stage, a Network Adaptability (NA) stage, a Network Collaboration (NC) stage, a Network Execution (NE) stage, and a Network Execution Response (NER) stage.

The RA stage is mainly configured to determine a service requirement. The NA stage is mainly configured to determine an execution operation list. The NC stage is mainly configured to coordinate execution schedules, functions, and/or resources of at least one sixth entity, and determine at least one execution operation of each sixth entity. The NE stage is mainly configured to execute the at least one execution operation. The NER stage is mainly configured to respond to the execution operation.

The service stages indicated by the SPI and the NSPI may be the same or different.

Exemplarily, the SPI and the NSPI may indicate different service stages by parameter values shown in the following table:

| Indicator | Parameter value | Parameter value description |
|---|---|---|
| SPI | RA | Current stage is RA stage |
| | NA | Current stage is NA stage |
| | NC | Current stage is NC stage |
| | NE | Current stage is NE stage |
| | NER | Current stage is NER stage |
| NSPI | RA | Next stage is RA stage |
| | NA | Next stage is NA stage |
| | NC | Next stage is NC stage |
| | NE | Next stage is NE stage |
| | NER | Next stage is NER stage |

The current service stage indicated by the plurality of indicators in the model training request message may be the RA stage, and the indicated next service stage may be the NA stage.

If any message includes the multiple indicators, an entity device receiving the corresponding message needs to determine the service stage currently required to be performed by the entity device according to the multiple indicators, and then execute an operation that should be completed in the corresponding service stage.

The service type of the target service in the model training request message is model training.

In a possible implementation, the requirement information of the target service in the model training request message may include at least one of training duration, first model accuracy, first model complexity, a first model inference overhead, a training data volume, a training data source, first model generalization, or an algorithm source.

The first model accuracy, the first model complexity, the first model inference overhead, and the first model generalization may be desired model data.

The training data source may be the device itself, the network, or the third party.

The algorithm source may be the device itself, the network, or the third party.

If the second entity is a terminal device, the second entity needs to establish connection with the network, then determines the service requirement, and then send the model training request message to the first entity.

In S302, the first entity determines model-training-related information according to the model training request message.

In a possible implementation, the model-training-related information may include at least one of a resource type, a resource size, a training algorithm, or a training mode.

The resources may include computing resources, storage resources, or the like.

Exemplarily, after receiving the model training request message, the first entity may determine the type and size of the computing resource according to the training data volume, the training duration, and the first model complexity in the model training request message, may determine the size of the storage resource according to the training data volume, may determine the training algorithm according to the algorithm source, the first model inference overhead (optional), and the model generalization (optional), and may determine the training mode according to the first model complexity, the training data volume, the training data source, the training algorithm, the type of the computing resource (optional), and the size of the computing resource (optional).

The training mode may include centralized training, distributed training, joint training, or the like.

In a possible implementation, the model-training-related information may be configured for determining a target QoS parameter list and an execution operation list, and the execution operation list is configured for indicating execution operations of a plurality of entities in model training.

In a possible implementation, the target QoS parameter list may include a target QoS parameter of a third entity and a target QoS parameter of at least one sixth entity, or the target QoS parameter list may include the target QoS parameter of the third entity.

In a possible implementation, the execution operation list includes execution operations of the third entity and execution operations of the at least one sixth entity, or the execution operation list includes the execution operations of the third entity.

In a possible implementation, the first entity may determine the target QoS parameter of the third entity and the target QoS parameter of the at least one sixth entity according to the model-training-related information. Alternatively, the first entity may determine the target QoS parameter of the third entity according to the model-training-related information, and then, the third entity determines the target QoS parameter of the at least one sixth entity. Alternatively, the first entity may send the model-training-related information to the third entity, and the third entity determines the target QoS parameter of the third entity and the target QoS parameter of the at least one sixth entity.

The target QoS parameter list may be configured to determine the execution operation list.

In a possible implementation, any of the above target QoS parameters includes at least one of a service index parameter, a resource index parameter, a transmission index parameter, or a collaboration index parameter.
the service index parameter includes at least one of second model accuracy, second model generalization, second model complexity, or second model inference overhead;
the resource index parameter includes at least one of the resource type, the resource size, a resource priority, or resource use duration;
the transmission index parameter includes at least one of transmission reliability, a transmission delay, or a transmission bandwidth; and
the collaboration index parameter includes a collaboration type.

The service index parameter may refer to an index parameter that a model obtained by final training should achieve, or to conditions that need to be met in an inference process of a desired model.

For example, the second model accuracy may be the model accuracy that the model obtained by the final training should achieve. The second model generalization may be the model generalization that the model obtained by the final training should achieve. The second model complexity may be the model complexity that the model obtained by the final training should achieve. The second model inference overhead may be the desired overhead numerical requirement in the model inference process.

The target QoS parameters of different entities may be the same or different. When the model training does not need to be performed collaboratively by a plurality of sixth entities, the target QoS parameter of the third entity and the target parameter of the sixth entity may be the same. When the model training needs to be performed collaboratively by a plurality of sixth entities, the target QoS parameter of the third entity may be different from the target parameter of the sixth entity. The target QoS parameter of the third entity may refer to a target QoS parameter of the entire model, and the target QoS parameter of each sixth entity may refer to a target QoS parameter of a part of the model.

Exemplarily, if training of a model 1 needs to be performed collaboratively by two sixth entities (the sixth entity 1 performs training to obtain a part A in the model 1, and the sixth entity 2 performs training to obtain a part B in the model 1), the target QoS parameter of the third entity may refer to the target QoS parameter of the model 1, the target QoS parameter of the sixth entity 1 may refer to a target QoS parameter of the part A in the model 1, and the target QoS parameter of the sixth entity 2 may refer to a target QoS parameter of the part B in the model 1.

The target QoS parameters of different entities being the same may mean that types and parameter values of specific parameters in the target QoS parameters are completely the same. The target QoS parameters of different entities being different may mean that the types and/or parameter values of the specific parameters in the target QoS parameters are different.

In S303, the first entity sends a first indication message to the third entity.

In other words, the third entity receives the first indication message sent by the first entity.

The first indication message includes the model-training-related information, or the first indication message includes the target QoS parameter list and the execution operation list.

In a possible implementation, the first indication message may further include a service identifier of model training, a plurality of indicators, and an identifier of an anchor network element, and the plurality of indicators are configured to indicate the current service stage and the next service stage.

The service identifier of model training may be a unique identifier assigned by the first entity for target model training to distinguish from other model training services or other endogenous intelligence services, and the target model training may refer to model training requested by the second entity.

The anchor network element may refer to the third entity or the at least one sixth entity.

The first indication message may further include a Media Access Control (MAC) address of the anchor network element.

In a possible implementation, if the target QoS parameter list only includes the target QoS parameter of the third entity (that is, it does not include the target QoS parameter of the at least one sixth entity), and the execution operation list only includes the execution operation of the third entity (that is, it does not include the execution operation of the at least one sixth entity), the first indication message may further include an identifier of the at least one sixth entity.

The current service stage indicated by the plurality of indicators in the first indication message may be the NA stage, and the indicated next service stage may be the NC stage.

When the model training service does not need to be performed collaboratively by a plurality of sixth entities (that is, the number of the sixth entities is one), the plurality of indicators in the first indication message do not need to indicate the NC stage.

In S304, the third entity sends an execution operation request message to the at least one sixth entity according to the target QoS parameter list and the execution operation list.

In other words, each sixth entity receives the execution operation request message sent by the third entity.

The execution operation request message may be configured for indicating the at least one sixth entity to perform model training.

In a possible implementation, the execution operation request message may include at least one of the service identifier of model training, an identifier of a target sixth entity, a plurality of indicators, an execution operation of the target sixth entity, the training data volume, the training data source, or a target QoS parameter of the target sixth entity, and the plurality of indicators are configured for indicating the current service stage and the next service stage.

The target sixth entity is any one of the at least one sixth entity.

The identifier of the target sixth entity may be an execution operation identifier of the target sixth entity.

The current service stage indicated by the plurality of indicators in the execution operation request message may be the NC stage, and the indicated next service stage may be the NE stage.

The third entity may send the execution operation request message to the at least one sixth entity at the same time or in sequence.

In a possible implementation, in a case that the target QoS parameter list includes the target QoS parameter of the at least one sixth entity, and the execution operation list includes the execution operation of the at least one sixth entity, the target QoS parameter of the at least one sixth entity in the target QoS parameter list and the execution operation in the execution operation list may be separated and sent to each corresponding sixth entity by the execution operation request message.

In a possible implementation, in a case that the target QoS parameter list includes only the target QoS parameter of the third entity (that is, it does not include the target QoS parameter of the at least one sixth entity), and the execution operation list includes only the execution operation of the third entity (that is, it does not include the execution operation of the at least one sixth entity), the target QoS parameter of the at least one sixth entity and the execution operation of the at least one sixth entity may be determined according to the target QoS parameter of the third entity and the execution operation of the third entity, and then sent to each corresponding sixth entity through the execution operation request message.

FIG. 3 only shows the situation that the third entity sends the execution operation request message to two sixth entities, and when the model training service does not need to be performed collaboratively by a plurality of sixth entities (that is, the number of the sixth entities is one), the third entity may send the execution operation request message to only one sixth entity, and in this case, the plurality of indicators in the execution operation request message do not need to indicate the NC stage.

In S305,each sixth entity performs model training according to the execution operation request message, so as to obtain a model training result.

After receiving the execution operation request message, the sixth entity may first determine the service stage (NE stage) that the sixth entity should perform according to the plurality of indicators, and then perform model training according to the execution operation of the target sixth entity in the execution operation request message, the training data volume, the training data source (optional), and the target QoS parameter of the target sixth entity, so as to obtain the model training result.

In a case that the model training is performed collaboratively by a plurality of sixth entities, the model training result of each sixth entity may refer to a partial result in the whole model training, and may be used to determine the result of the whole model training.

In a case that the model training does not need to be performed collaboratively by a plurality of sixth entities (that is, there is only one sixth entity), the model training result of the sixth entity may refer to the result of the whole model training.

In S306, each sixth entity sends an execution operation response message to the third entity, where the execution operation response message includes the model training result.

In other words, the third entity sends the execution operation response message to the at least one sixth entity.

In a possible implementation, the execution operation response message may further include the service identifier of the model training, the identifier of the target sixth entity, and a plurality of indicators.

Each sixth entity may send one execution operation response message.

The current service stage indicated by the plurality of indicators in the execution operation response message may be the NE stage, and the indicated next service stage may be the NER stage.

In S307, the third entity sends a first response message to the first entity, where the first response message includes the model training result.

In other words, the first entity receives the first response message sent by the third entity.

The model training result in the first response message is the result of the whole model training.

In a possible implementation, the first response message may further include the service identifier of the model training and a plurality of indicators.

The current service stage indicated by the plurality of indicators in the first response message may be the NER stage, and the indicated next service stage may be the NER stage.

In S308, the first entity sends a second response message to the second entity, where the second response message includes the model training result.

In other words, the second entity receives the second response message sent by the first entity.

The model training result in the second response message is the result of the whole model training.

In a possible implementation, the second response message may further include the service identifier of the model training and a plurality of indicators.

The current service stage indicated by the plurality of indicators in the second response message may be the NER stage, and the indicated next service stage may be the NER stage.

In the embodiment shown in FIG. 3, a closed-loop model training procedure is constructed through interaction among the first entity, the second entity, the third entity and the at least one sixth entity, so that the communication system can intelligently provide the model training services for users, networks or third parties based on model training requirements in the communication process. In addition, the QoS parameters suitable for the model training service are also determined in the model training process, and compared with previous QoS parameters, the QoS parameters determined in the embodiment of the disclosure can meet the QoS requirement of the model training service.

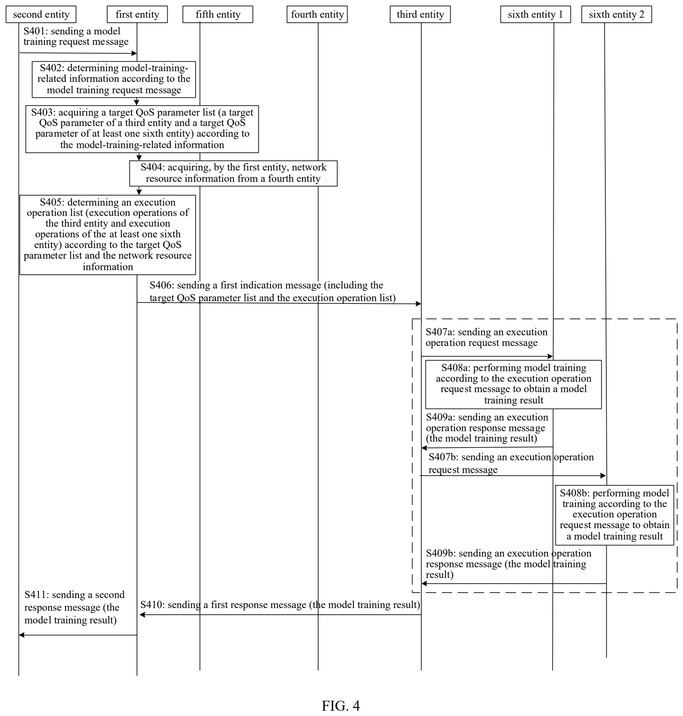

The embodiment shown in FIG. 3 illustrates a basic procedure of providing the model training service by the communication system, and based on the embodiment shown in FIG. 3, how each parameter in the model training service is determined is described in detail below with reference to FIG. 4 to FIG. 6.

FIG. 4 is a flowchart of another model training method according to an embodiment of the present disclosure. As shown in FIG. 4, the method includes S401 to S411.

In S401, a second entity sends a model training request message to a first entity.

In S402, the first entity determines model-training-related information according to the model training request message.

It should be noted that reference may be made to the execution process of S301 to S302 for an execution process of S401 to S402 which is not repeated herein.

In S403, the first entity acquires a target QoS parameter list according to the model-training-related information, where the target QoS parameter list includes a target QoS parameter of a third entity and a target QoS parameter of at least one sixth entity.

In a possible implementation, the first entity may acquire the target QoS parameter list according to the model-training-related information by:

determining a candidate QoS parameter list according to the model-training-related information; sending the candidate QoS parameter list to a fifth entity, where the candidate QoS parameter list is configured for determining the target QoS parameter list; and receiving the target QoS parameter list or a confirmation message sent by the fifth entity, where the confirmation message is configured for indicating that the candidate QoS parameter list is the target QoS parameter list.

The candidate QoS parameter list includes a candidate QoS parameter of the third entity and a candidate QoS parameter of the at least one sixth entity.

The candidate QoS parameter list may be the same as the target QoS parameter list or different from the target QoS parameter list only in that specific values of the parameters in the two lists differ.

After receiving the candidate QoS parameter list sent by the first entity, the fifth entity may determine, in combination with global data (network data such as bandwidths, usage of the computing resources, usage of the storage resources, or the like), whether the candidate QoS parameter list needs to be adjusted. If it is determined that the candidate QoS parameter list does not need to be adjusted, the fifth entity may send the confirmation information to the first entity to indicate that the candidate QoS parameter list is available, and save the candidate QoS parameter list as the target QoS parameter list. If it is determined that the candidate QoS parameter list needs to be adjusted, the fifth entity may adjust the candidate QoS parameter list in combination with the global data to obtain the target QoS parameter list, send the target QoS parameter list to the first entity, and save the target QoS parameter list.

By using the fifth entity to determine whether the candidate QoS parameter list needs to be adjusted, the model training service can be ensured to be smoothly performed, and mutual interference among a plurality of endogenous intelligence services in the communication system can be avoided, that is, by using the fifth entity to determine whether the candidate QoS parameter list needs to be adjusted, the plurality of endogenous intelligence services in the communication system can be ensured to be smoothly performed.

In a possible implementation, the first entity may acquire the target QoS parameter list according to the model-training-related information by sending the model-training-related information to the fifth entity, and receiving the target QoS parameter list sent by the fifth entity.

After receiving the model-training-related information, the fifth entity may first query whether a QoS parameter list corresponding to the model-training-related information exists in QoS parameter lists stored in the fifth entity. If the QoS parameter list corresponding to the model-training-related information exists in QoS parameter lists stored in the fifth entity, the fifth entity determines the QoS parameter list corresponding to the model-training-related information as the target QoS parameter list and sends the target QoS parameter list to the first entity. If the QoS parameter list corresponding to the model-training-related information does not exist in QoS parameter lists stored in the fifth entity, the fifth entity determines the target QoS parameter list according to the model-training-related information and the global data, sends the target QoS parameter list to the first entity, and saves the target QoS parameter list.

When determining the QoS parameter list corresponding to the model-training-related information as the target QoS parameter list, the fifth entity may determine, in combination with the global data, whether the QoS parameter list corresponding to the model-training-related information can be used as the target QoS parameter list, and if not, may adjust the QoS parameter list to the target QoS parameter list in combination with the global data.

By determining the target QoS parameter list through the fifth entity, the model training service can be ensured to be smoothly performed, and mutual interference among a plurality of endogenous intelligence services in the communication system can be avoided, that is, by determining the target QoS parameter list through the fifth entity, the plurality of endogenous intelligence services in the communication system can be ensured to be smoothly performed.

In S404, the first entity acquires network resource information from a fourth entity.

The network resource information may be configured to indicate load situations of the plurality of third entities and the plurality of sixth entities in the network.

In S405, the first entity determines an execution operation list according to the target QoS parameter list and the network resource information, where the execution operation list includes execution operations of the third entity and execution operations of the at least one sixth entity.

The number of the execution operations of each entity may be one or more. The execution operations may include task computation, data processing, AI training, and/or AI inference, etc.

The first entity may determine the execution operations of a plurality of entities according to the target QoS parameter list, determine the appropriate third entity and the at least one sixth entity according to the network resource information, and allocate the execution operations of the plurality of entities to the third entity and the at least one sixth entity.

In S406, the first entity sends a first indication message to the third entity, where the first indication message includes the target QoS parameter list and the execution operation list.

In S407, the third entity sends an execution operation request message to the at least one sixth entity according to the target QoS parameter list and the execution operation list.

In S408, each sixth entity performs model training according to the execution operation request message, so as to obtain a model training result.

In S409, each sixth entity sends an execution operation response message to the third entity, where the execution operation response message includes the model training result.

In S410, the third entity sends a first response message to the first entity, where the first response message includes the model training result.

In S411, the first entity sends a second response message to the second entity, where the second response message includes the model training result.

It should be noted that reference may be made to the execution process of S303 to S308 for an execution process of S406 to S411 which is not repeated herein.

In the embodiment shown in FIG. 4, a closed-loop model training procedure is constructed through interaction among the first entity, the second entity, the third entity, the fourth entity, the fifth entity, and the at least one sixth entity, so that the communication system can intelligently provide the model training services for users, networks or third parties based on model training requirements in the communication process. In addition, the first entity and the fifth entity also determine the QoS parameters suitable for the model training service in the model training process, and compared with previous QoS parameters, the QoS parameters determined in the embodiment of the disclosure can meet the QoS requirement of the model training service.

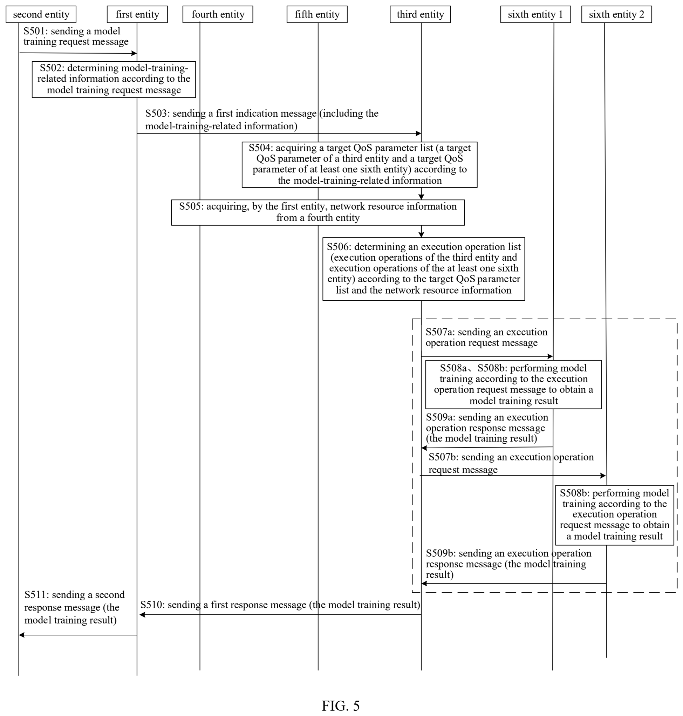

FIG. 5 is a flowchart of still another model training method according to an embodiment of the present disclosure. As shown in FIG. 5, the method includes S501 to S511.

In S501, a second entity sends a model training request message to a first entity.

In S502, the first entity determines model-training-related information according to the model training request message.

In S503, the first entity sends a first indication message to a third entity, where the first indication message includes the model-training-related information.

It should be noted that reference may be made to the execution process of S301 to S303 for an execution process of S501 to S503 which is not repeated herein.

In S504, the third entity acquires a target QoS parameter list according to the model-training-related information, where the target QoS parameter list includes a target QoS parameter of the third entity and a target QoS parameter of at least one sixth entity.

In a possible implementation, the third entity may acquire the target QoS parameter list according to the model-training-related information by:
determining a candidate QoS parameter list according to the model-training-related information; sending the candidate QoS parameter list to a fifth entity, where the candidate QoS parameter list is configured for determining the target QoS parameter list; and receiving the target QoS parameter list or a confirmation message sent by the fifth entity, where the confirmation message is configured for indicating that the candidate QoS parameter list is the target QoS parameter list.

After receiving the candidate QoS parameter list sent by the third entity, the fifth entity may determine, in combination with global data, whether the candidate QoS parameter list needs to be adjusted. If it is determined that the candidate QoS parameter list does not need to be adjusted, the fifth entity may send the confirmation information to the third entity to indicate that the candidate QoS parameter list is available, and save the candidate QoS parameter list as the target QoS parameter list. If it is determined that the candidate QoS parameter list needs to be adjusted, the fifth entity may adjust the candidate QoS parameter list in combination with the global data to obtain the target QoS parameter list, send the target QoS parameter list to the third entity, and save the target QoS parameter list.

By using the fifth entity to determine whether the candidate QoS parameter list needs to be adjusted, the model training service can be ensured to be smoothly performed, and mutual interference among a plurality of endogenous intelligence services in the communication system can be avoided, that is, by using the fifth entity to determine whether the candidate QoS parameter list needs to be adjusted, the plurality of endogenous intelligence services in the communication system can be ensured to be smoothly performed.

In a possible implementation, the third entity may acquire the target QoS parameter list according to the model-training-related information by sending the model-training-related information to the fifth entity, and receiving the target QoS parameter list sent by the fifth entity.

After receiving the model-training-related information, the fifth entity may first query whether a QoS parameter list corresponding to the model-training-related information exists in QoS parameter lists stored in the fifth entity. If the QoS parameter list corresponding to the model-training-related information exists in QoS parameter lists stored in the fifth entity, the fifth entity determines the QoS parameter list corresponding to the model-training-related information as the target QoS parameter list and sends the target QoS parameter list to the third entity. If the QoS parameter list corresponding to the model-training-related information does not exist in QoS parameter lists stored in the fifth entity, the fifth entity determines the target QoS parameter list according to the model-training-related information and the global data, sends the target QoS parameter list to the third entity, and saves the target QoS parameter list.

When determining the QoS parameter list corresponding to the model-training-related information as the target QoS parameter list, the fifth entity may determine, in combination with the global data, whether the QoS parameter list corresponding to the model-training-related information can be used as the target QoS parameter list, and if not, may adjust the QoS parameter list to the target QoS parameter list in combination with the global data.

By determining the target QoS parameter list through the fifth entity, the model training service can be ensured to be smoothly performed, and mutual interference among a plurality of endogenous intelligence services in the communication system can be avoided, that is, by determining the target QoS parameter list through the fifth entity, the plurality of endogenous intelligence services in the communication system can be ensured to be smoothly performed.

In S505: the third entity acquires network resource information from a fourth entity.

In S506, the third entity determines an execution operation list according to the target QoS parameter list and the network resource information, where the execution operation list includes execution operations of the third entity and execution operations of the at least one sixth entity.

It should be noted that reference may be made to the execution process of S404 to S405 for an execution process of S505 to S506 which is not repeated herein.

In S507, the third entity sends an execution operation request message to the at least one sixth entity according to the target QoS parameter list and the execution operation list.

In S508, each sixth entity performs model training according to the execution operation request message, so as to obtain a model training result.

In S509, each sixth entity sends an execution operation response message to the third entity, where the execution operation response message includes the model training result.

In S510, the third entity sends a first response message to the first entity, where the first response message includes the model training result.

In S511, the first entity sends a second response message to the second entity, where the second response message includes the model training result.

It should be noted that reference may be made to the execution process of S304 to S308 for an execution process of S507 to S511 which is not repeated herein.

In the embodiment shown in FIG. 5, a closed-loop model training procedure is constructed through interaction among the first entity, the second entity, the third entity, the fourth entity, the fifth entity, and the at least one sixth entity, so that the communication system can intelligently provide the model training services for users, networks or third parties based on model training requirements in the communication process. In addition, the third entity and the fifth entity also determine the QoS parameters suitable for the model training service in the model training process, and compared with previous QoS parameters, the QoS parameters determined in the embodiment of the disclosure can meet the QoS requirement of the model training service.

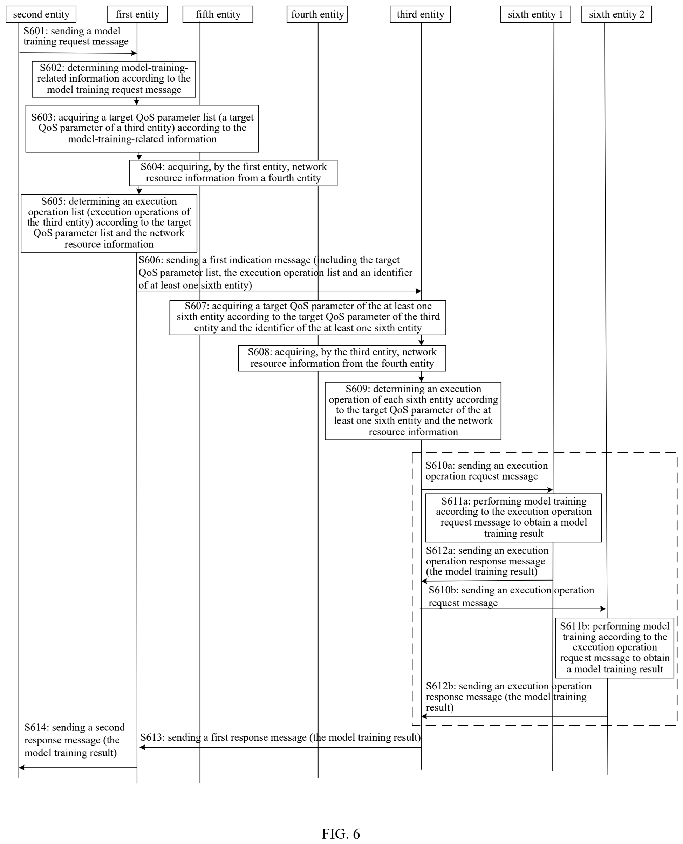

FIG. 6 is a flowchart of yet another model training method according to an embodiment of the present disclosure. As shown in FIG. 6, the method includes S601 to S614.

In S601, a second entity sends a model training request message to a first entity.

In S602, the first entity determines model-training-related information according to the model training request message.

In S603, the first entity acquires a target parameter list according to the model-training-related information, where the target QoS parameter list includes a target QoS parameter of a third entity.

In S604, the first entity acquires network resource information from a fourth entity.

In S605, the first entity determines an execution operation list according to the target QoS parameter list and the network resource information, where the execution operation list includes execution operations of the third entity.

It should be noted that reference may be made to the execution process of S403 to S405 for an execution process of S603 to S605 which is not repeated herein.

In S606, the first entity sends a first indication message to the third entity, where the first indication message includes the target QoS parameter list, the execution operation list and an identifier of at least one sixth entity.

In S607, the third entity acquires a target QoS parameter of the at least one sixth entity according to the target QoS parameter of the third entity and the identifier of the at least one sixth entity.

In a possible implementation, the third entity may acquire the target QoS parameter of the at least one sixth entity according to the target QoS parameter of the third entity and the identifier of the at least one sixth entity by:

determining at least one candidate QoS parameter according to the target QoS parameter of the third entity and the identifier of the at least one sixth entity; sending the at least one candidate QoS parameter to the fifth entity, where the at least one candidate QoS parameter is configured to determine the target QoS parameter of the at least one sixth entity; and receiving the target QoS parameter of the at least one sixth entity or a confirmation message sent by the fifth entity, where the confirmation message is configured for indicating that the at least one candidate QoS parameter is the target QoS parameter of the at least one sixth entity.

The candidate QoS parameter may be a candidate QoS parameter of the sixth entity.

After receiving the at least one candidate QoS parameter sent by the third entity, the fifth entity may determine, in combination with global data, whether the at least one candidate QoS parameter needs to be adjusted. If it is determined that the at least one candidate QoS parameter does not need to be adjusted, the fifth entity may send the confirmation information to the third entity to indicate that the at least one candidate QoS parameter is available, and save the at least one candidate QoS parameter as the target QoS parameter of the at least one sixth entity. If it is determined that the at least one candidate QoS parameter needs to be adjusted, the fifth entity may adjust the at least one candidate QoS parameter in combination with the global data to obtain the target QoS parameter of the at least one sixth entity, send the target QoS parameter of the at least one sixth entity to the third entity, and save the target QoS parameter of the at least one sixth entity.

By using the fifth entity to determine whether the at least one candidate QoS parameter needs to be adjusted, the model training service can be ensured to be smoothly performed, and mutual interference among a plurality of endogenous intelligence services in the communication system can be avoided, that is, by using the fifth entity to determine whether the at least one candidate QoS parameter needs to be adjusted, the plurality of endogenous intelligence services in the communication system can be ensured to be smoothly performed.

In a possible implementation, the third entity may acquire the target QoS parameter of the at least one sixth entity according to the target QoS parameter of the third entity and the identifier of the at least one sixth entity by: sending the target QoS parameter of the third entity and the identifier of the at least one sixth entity to the fifth entity, where the target QoS parameter of the third entity is configured for determining the target QoS parameter of the at least one sixth entity; and receiving the target QoS parameter of the at least one sixth entity sent by the fifth entity.

After receiving the target QoS parameter of the third entity and the identifier of the at least one sixth entity, the fifth entity may determine the target QoS parameter of the at least one sixth entity according to the target QoS parameter of the third entity, the identifier of the at least one sixth entity and the global data, send the target QoS parameter of the at least one sixth entity to the third entity, and save the target QoS parameter of the at least one sixth entity.

By determining the target QoS parameter of the at least one sixth entity through the fifty entity, the model training service can be ensured to be smoothly performed, and mutual interference among a plurality of endogenous intelligence services in the communication system can be avoided, that is, by determining the target QoS parameter of the at least one sixth entity through the fifth entity, the plurality of endogenous intelligence services in the communication system can be ensured to be smoothly performed.

In S608, the third entity acquires network resource information from the fourth entity.

In S609, the third entity determines an execution operation of each sixth entity according to the target QoS parameter of the at least one sixth entity and the network resource information.

It should be noted that reference may be made to the execution process of S404 to S405 for an execution process of S608 to S609 which is not repeated herein.

In S610, the third entity sends an execution operation request message to each sixth entity.

In S611, each sixth entity performs model training according to the execution operation request message, so as to obtain a model training result.

In S612, each sixth entity sends an execution operation response message to the third entity, wherein the execution operation response message includes the model training result.

In S613, the third entity sends a first response message to the first entity, where the first response message includes the model training result.

In S614, the first entity sends a second response message to the second entity, where the second response message includes the model training result.

It should be noted that reference may be made to the execution process of S305 to S308 for an execution process of S611 to S614 which is not repeated herein.

In the embodiment shown in FIG. 6, a closed-loop model training procedure is constructed through interaction among the first entity, the second entity, the third entity, the fourth entity, the fifth entity, and the at least one sixth entity, so that the communication system can intelligently provide the model training services for users, networks or third parties based on model training requirements in the communication process. In addition, the first entity, the third entity and the fifth entity also determine the QoS parameters suitable for the model training service in the model training process, and compared with previous QoS parameters, the QoS parameters determined in the embodiment of the disclosure can meet the QoS requirement of the model training service.

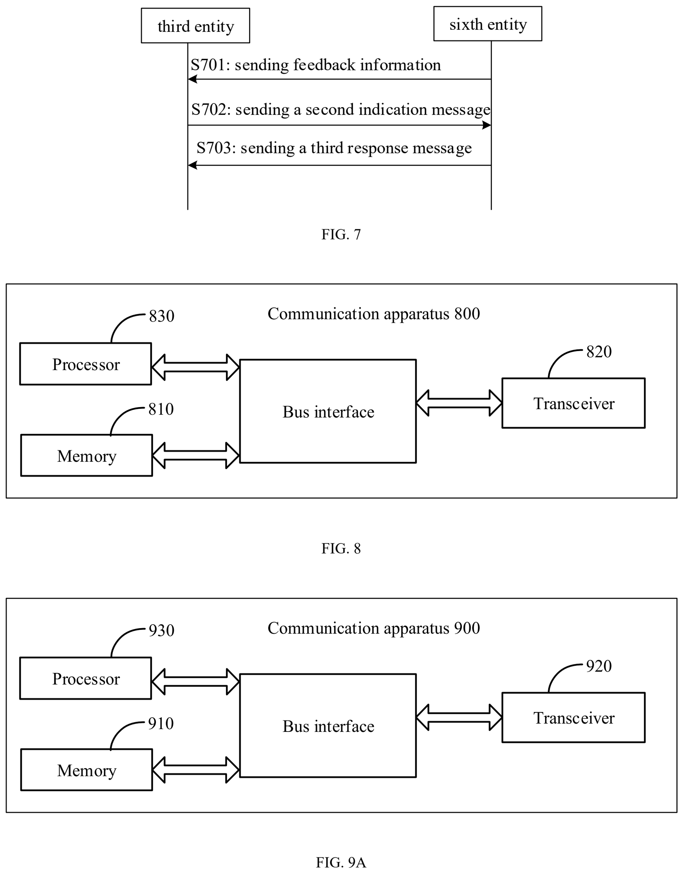

On the basis of any of the above embodiments, how the third entity updates the model of the at least one sixth entity and coordinates execution schedules, functions, and/or resources of the at least one sixth entity will be described below with reference to FIG. 7. Since processes of interaction between the third entity and the at least one sixth entity are the same, FIG. 7 only shows the process of interaction between the third entity and one sixth entity.

FIG. 7 is a flowchart of an interaction method according to an embodiment of the present disclosure. As shown in FIG. 7, the method includes S701 to S703.

In S701, a sixth entity sends feedback information to a third entity.

The feedback information may include information of an execution status, resources, or the like, of the sixth entity.

The sixth entity may send the feedback information to the third entity after receiving an execution operation request message, or send the feedback information to the third entity in an execution process. The sixth entity may also periodically send the feedback information to the third entity.

In S702, the third entity sends a second indication message to the sixth entity according to the feedback information, where the second indication message is configured for indicating the sixth entity to perform model updating or resource collaboration adjustment.

The third entity may receive the feedback information sent by a plurality of sixth entities that execute different target services, coordinate resources of the plurality of sixth entities according to the feedback information, indicate an update model of the plurality of sixth entities according to the feedback information, and send the second indication message to the plurality of sixth entities to indicate the plurality of sixth entities to perform collaboration or updating.

The third entity may also receive the feedback information sent by a plurality of sixth entities that execute the same target service, coordinate execution schedules, functions, and resources of the plurality of sixth entities according to the feedback information, indicate an update model of the plurality of sixth entities according to the feedback information, and send the second indication message to the plurality of sixth entities to indicate the plurality of sixth entities to perform collaboration or updating.

In S703, the sixth entity sends a third response message to the third entity.

The third response message may be configured to indicate agreement with the collaboration, completion of the collaboration, or rejection of the collaboration.

The sixth entity may send the third response message to the third entity after receiving the second indication message, and then, the sixth entity performs model updating or resource collaboration adjustment according to the second indication message.

The sixth entity may also send the third response message to the third entity after performing model updating or resource collaboration adjustment according to the second indication message.

FIG. 8 is a schematic structural diagram of a model training apparatus 800 according to an embodiment of the present disclosure. As shown in FIG. 8, the apparatus 800 includes a memory 810, a transceiver 820, and a processor 830.

The memory 810 is configured to store a computer program. The transceiver 820 is configured to transmit and receive data under control of the processor 830. The processor 830 is configured to read the computer program stored in the memory 810 and perform the following operations:
receiving a model training request message sent by a second entity;
determining model-training-related information according to the model training request message, where the model-training-related information is configured for determining a target Quality of Service (QoS) parameter list and an execution operation list, and the execution operation list is configured for indicating execution operations of a plurality of entities in model training;
sending a first indication message to a third entity, where the first indication message includes the model-training-related information, or the first indication message includes the target QoS parameter list and the execution operation list;
receiving a first response message sent by the third entity, where the first response message includes a model training result; and
sending a second response message to the second entity, where the second response message includes the model training result.

In an embodiment, the model training request message includes at least one of training duration, first model accuracy, first model complexity, first model inference overhead, a training data volume, a training data source, first model generalization, or an algorithm source.

In an embodiment, the model-training-related information includes at least one of a resource type, a resource size, a training algorithm, or a training mode.

In an embodiment, the first indication message includes the target QoS parameter list and the execution operation list, and the processor 830 is further configured to perform the following operations:
acquiring the target QoS parameter list according to the model-training-related information;
acquiring network resource information from a fourth entity; and
determining the execution operation list according to the target QoS parameter list and the network resource information.

In an embodiment, the processor 830 is specifically configured to perform the following operations:
determining a candidate QoS parameter list according to the model-training-related information;
sending the candidate QoS parameter list to a fifth entity, where the candidate QoS parameter list is configured for determining the target QoS parameter list; and
receiving the target QoS parameter list or a confirmation message sent by the fifth entity, where the confirmation message is configured for indicating that the candidate QoS parameter list is the target QoS parameter list.

In an embodiment, the processor 830 is specifically configured to perform the following operations:
sending the model-training-related information to the fifth entity; and
receiving the target QoS parameter list sent by the fifth entity.

In an embodiment, the target QoS parameter list includes a target QoS parameter of the third entity and a target QoS parameter of at least one sixth entity, or the target QoS parameter list includes the target QoS parameter of the third entity.

In an embodiment, the target QoS parameter includes at least one of a service index parameter, a resource index parameter, a transmission index parameter, or a collaboration index parameter;
the service index parameter includes at least one of second model accuracy, second model generalization, second model complexity, or second model inference overhead;
the resource index parameter includes at least one of the resource type, the resource size, a resource priority, or resource use duration;
the transmission index parameter includes at least one of transmission reliability, a transmission delay, or a transmission bandwidth; and
the collaboration index parameter includes a collaboration type.

In an embodiment, the first indication message further includes a service identifier of model training, a plurality of indicators, and an identifier of an anchor network element, and the plurality of indicators are configured to indicate a current service stage and a next service stage;
the first response message further includes the service identifier and the plurality of indicators; and
the second response message further includes the service identifier and the plurality of indicators.

In FIG. 8, a bus architecture may include any number of buses and bridges that are interconnected, which specifically link various circuits of one or more processors represented by the processor 830 and memories represented by the memory 810 together. The bus architecture may also link together various other circuits such as peripheral devices, voltage regulators, and power management circuits, which are well known in the art, and therefore, will not be further described herein. A bus interface provides an interface. The transceiver 820 may be a number of elements, i.e., including a transmitter and a receiver, that provide a unit for communicating with various other apparatuses over transmission mediums. The transmission mediums include wireless channels, wired channels, optical cables, or the like. The processor 830 is responsible for managing the bus architecture and general processing, and the memory 810 may store data used when the processor 830 performs operations.

Optionally, the processor 830 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

It should be noted herein that the model training apparatus 800 according to the present disclosure can implement all the method steps implemented by the first entity in the method embodiment and can achieve the same technical effects, and the same parts and beneficial effects of this embodiment as those of the method embodiment are not repeated herein.

FIG. 9A is a schematic structural diagram of a model training apparatus 900 according to an embodiment of the present disclosure, and as shown in FIG. 9A, the apparatus 900 includes a memory 910, a transceiver 920, and a processor 930.

The memory 910 is configured to store a computer program. The transceiver 920 is configured to transmit and receive data under control of the processor 930. The processor 930 is configured to read the computer program stored in the memory 910 and perform the following operations:
receiving a first indication message sent by a first entity, where the first indication message includes model-training-related information, or the first indication message includes a target Quality of Service (QoS) parameter list and an execution operation list, and the execution operation list is configured for indicating execution operations of a plurality of entities in model training;
sending an execution operation request message to at least one sixth entity according to the target QoS parameter list and the execution operation list, where the execution operation request message is configured for indicating the at least one sixth entity to perform model training;
receiving an execution operation response message sent by the at least one sixth entity; and
sending a first response message to the first entity, where the first response message includes a model training result.

In an embodiment, the model-training-related information includes at least one of a resource type, a resource size, a training algorithm, or a training mode.

In an embodiment, the execution operation request message includes at least one of a service identifier of model training, an identifier of a target sixth entity, a plurality of indicators, an execution operation of the target sixth entity, a training data volume, a training data source, or a target QoS parameter of the target sixth entity, and the plurality of indicators are configured for indicating a current service stage and a next service stage;
the execution operation response message includes the service identifier of the model training, the identifier of the target sixth entity, the plurality of indicators and a model training result of the target sixth entity.

In an embodiment, the first indication message includes the model-training-related information, and the processor 930 is further configured to perform the following operations:
acquiring the target QoS parameter list according to the model-training-related information;
acquiring network resource information from a fourth entity; and
determining the execution operation list according to the target QoS parameter list and the network resource information.

In an embodiment, the processor 930 is specifically configured to perform the following operations:
determining a candidate QoS parameter list according to the model-training-related information;
sending the candidate QoS parameter list to a fifth entity, where the candidate QoS parameter list is configured for determining the target QoS parameter list; and
receiving the target QoS parameter list or a confirmation message sent by the fifth entity, where the confirmation message is configured for indicating that the candidate QoS parameter list is the target QoS parameter list.

In an embodiment, the processor 930 is specifically configured to perform the following operations:
sending the model-training-related information to the fifth entity; and
receiving the target QoS parameter list sent by the fifth entity.

In an embodiment, the target QoS parameter list includes a target QoS parameter of the third entity and a target QoS parameter of the at least one sixth entity.

In an embodiment, the first indication message includes the target QoS parameter list, the execution operation list, and an identifier of the at least one sixth entity, the target QoS parameter list includes the target QoS parameter of the third entity, and the execution operation list includes an execution operation of the third entity, and the processor 930 is further configured to perform the following operations:
acquiring the target QoS parameter of the at least one sixth entity according to the target QoS parameter of the third entity and the identifier of the at least one sixth entity;
acquiring network resource information from a fourth entity;
determining an execution operation of each sixth entity according to the target QoS parameter of the at least one sixth entity and the network resource information; and
sending the execution operation request message to each sixth entity, where the execution operation request message includes the target QoS parameter and the execution operation of each sixth entity.

In an embodiment, the processor 930 is specifically configured to perform the following operations:
determining at least one candidate QoS parameter according to the target QoS parameter of the third entity and the identifier of the at least one sixth entity;
sending the at least one candidate QoS parameter to the fifth entity, where the at least one candidate QoS parameter is configured to determine the target QoS parameter of the at least one sixth entity; and
receiving the target QoS parameter of the at least one sixth entity or a confirmation message sent by the fifth entity, where the confirmation message is configured for indicating that the at least one candidate QoS parameter is the target QoS parameter of the at least one sixth entity.

In an embodiment, the processor 930 is specifically configured to perform the following operations:
sending the target QoS parameter of the third entity and the identifier of the at least one sixth entity to the fifth entity, where the target QoS parameter of the third entity is configured for determining the target QoS parameter of the at least one sixth entity; and
receiving the target QoS parameter of the at least one sixth entity sent by the fifth entity.

In an embodiment, the target QoS parameter includes at least one of a service index parameter, a resource index parameter, a transmission index parameter, or a collaboration index parameter;
the service index parameter includes at least one of second model accuracy, second model generalization, second model complexity, or second model inference overhead;
the resource index parameter includes at least one of the resource type, the resource size, a resource priority, or resource use duration;
the transmission index parameter includes at least one of transmission reliability, a transmission delay, or a transmission bandwidth; and
the collaboration index parameter includes a collaboration type.

In an embodiment, the processor 930 is further configured to perform the following operations:
receiving feedback information from the at least one sixth entity;
sending a second indication message to the at least one sixth entity according to the feedback information, where the second indication message is configured for indicating the sixth entity to perform model updating or resource collaboration adjustment; and
receiving a third response message sent by the at least one sixth entity.

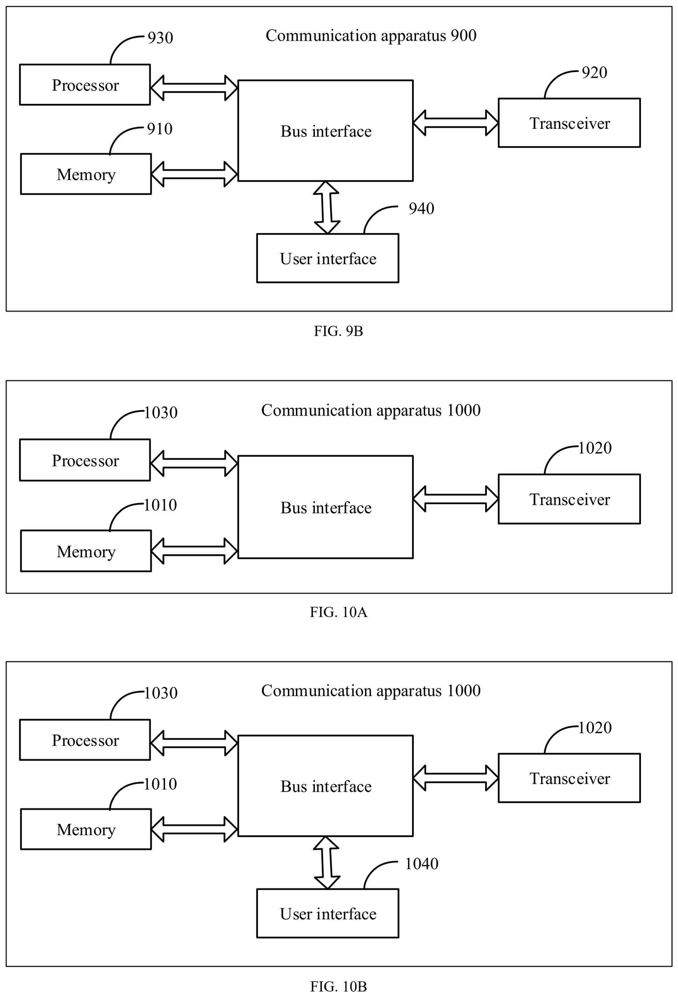

FIG. 9B is another schematic structural diagram of the model training apparatus 900 according to the embodiment of the present disclosure. As shown in FIG. 9B, in a case that the model training apparatus 900 is a terminal device, the apparatus may further include a user interface 940, and for different terminal devices, the user interface 940 may be an interface capable of externally or internally connecting required devices, and the connected devices include, but are not limited to, a keypad, a display, a loudspeaker, a microphone, a joystick, or the like.

In FIG. 9A and FIG. 9B, a bus architecture may include any number of buses and bridges that are interconnected, which specifically link various circuits of one or more processors represented by the processor 930 and memories represented by the memory 910 together. The bus architecture may also link together various other circuits such as peripheral devices, voltage regulators, and power management circuits, which are well known in the art, and therefore, will not be further described herein. A bus interface provides the interface. The transceiver 920 may be a number of elements, i.e., including a transmitter and a receiver, that provide a unit for communicating with various other apparatuses over transmission mediums. The transmission mediums include wireless channels, wired channels, optical cables, or the like. The processor 930 is responsible for managing the bus architecture and general processing, and the memory 910 may store data used when the processor 930 performs operations.

Optionally, the processor 930 may be a central processing unit CPU, an ASIC, an FPGA or a CPLD. The processor may also adopt a multi-core architecture.

The processor 930 is configured to execute all the method steps of the third entity of the embodiment of the present disclosure according to obtained executable instructions by calling the computer program stored in the memory 910. The processor 930 and the memory 910 may be physically arranged separately.

It should be noted herein that the model training apparatus 900 according to the present disclosure can implement all the method steps implemented by the third entity in the method embodiment and can achieve the same technical effects, and the same parts and beneficial effects of this embodiment as those of the method embodiment are not repeated herein.

FIG. 10A is a schematic structural diagram of a model training apparatus 1000 according to an embodiment of the present disclosure, and as shown in FIG. 10A, the apparatus 1000 includes: a memory 1010, a transceiver 1020, and a processor 1030.

The memory 1010 is configured to store a computer program. The transceiver 1020 is configured to transmit and receive data under control of the processor 1030. The processor 1030 is configured to read the computer program stored in the memory 1010 and perform the following operations:
receiving an execution operation request message sent by a third entity;
performing model training according to the execution operation request message to obtain a model training result; and
sending an execution operation response message to the third entity, where the execution operation response message includes the model training result.

In an embodiment, the execution operation request message includes at least one of a service identifier of model training, an identifier of a target sixth entity, a plurality of indicators, an execution operation of the target sixth entity, a training data volume, a training data source, or a target quality of service (QoS) index parameter of the target sixth entity, and the plurality of indicators are configured for indicating a current service stage and a next service stage;
the execution operation response message further includes the service identifier of the model training, an identifier of the sixth entity, and the plurality of indicators.

In an embodiment, the processor 1030 is further configured to perform the following operations:
sending feedback information to the third entity;
receiving a second indication message sent by the third entity, where the second indication message is configured for indicating the sixth entity to perform model updating or resource collaboration adjustment; and
sending a third response message to the third entity.

FIG. 10B is another schematic structural diagram of the model training apparatus 1000 according to the embodiment of the present disclosure. As shown in FIG. 10B, in a case that the model training apparatus 1000 is a terminal device, the apparatus may further include a user interface 1040, and for different terminal devices, the user interface 1040 may be an interface capable of externally or internally connecting required devices, and the connected devices include, but are not limited to, a keypad, a display, a loudspeaker, a microphone, a joystick, or the like.

In FIG. 10A and FIG. 10B, a bus architecture may include any number of buses and bridges that are interconnected, which specifically link various circuits of one or more processors represented by the processor 1030 and memories represented by the memory 1010 together. The bus architecture may also link together various other circuits such as peripheral devices, voltage regulators, and power management circuits, which are well known in the art, and therefore, will not be further described herein. A bus interface provides the interface. The transceiver 1020 may be a number of elements, i.e., including a transmitter and a receiver, that provide a unit for communicating with various other apparatuses over transmission mediums. The transmission mediums include wireless channels, wired channels, optical cables, or the like. The processor 1030 is responsible for managing the bus architecture and general processing, and the memory 1010 may store data used when the processor 1030 performs operations.

Optionally, the processor 1030 may be a central processing unit CPU, an ASIC, an FPGA or a CPLD. The processor may also adopt a multi-core architecture.

The processor 1030 is configured to execute all the method steps of the sixth entity of the embodiment of the present disclosure according to obtained executable instructions by calling the computer program stored in the memory 1010. The processor 1030 and the memory 1010 may be physically arranged separately.

It should be noted herein that the model training apparatus 1000 according to the present disclosure can implement all the method steps implemented by the sixth entity in the method embodiment and can achieve the same technical effects, and the same parts and beneficial effects of this embodiment as those of the method embodiment are not repeated herein.

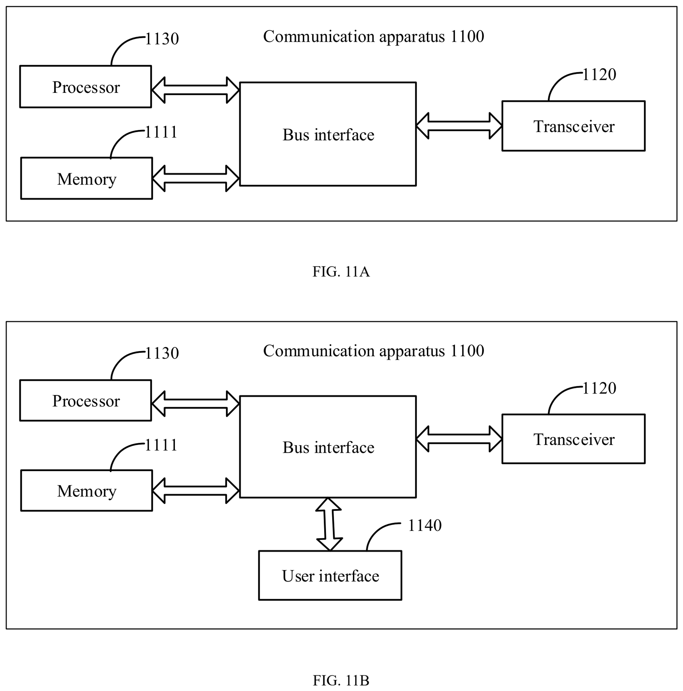

FIG. 11A is a schematic structural diagram of a model training apparatus 1100 according to an embodiment of the present disclosure, and as shown in FIG. 11A, the model training apparatus 1100 includes: a memory 1110, a transceiver 1120, and a processor 1130.

The memory 1110 is configured to store a computer program. The transceiver 1120 is configured to transmit and receive data under control of the processor 1130. The processor 1130 is configured to read the computer program stored in the memory 1110 and perform the following operations:
sending a model training request message to a first entity; and
receiving a second response message sent by the first entity, where the second response message includes a model training result.

In an embodiment, the model training request message includes at least one of training duration, first model accuracy, first model complexity, first model inference overhead, a training data volume, a training data source, first model generalization, or an algorithm source.

In an embodiment, the second response message further includes a service identifier of model training and a plurality of service procedure indicators, and the plurality of indicators are configured for indicating a current service stage and a next service stage.

FIG. 11B is another schematic structural diagram of the model training apparatus 1100 according to the embodiment of the present disclosure. As shown in FIG. 11B, in a case that the model training apparatus 1100 is a terminal device, the apparatus may further include a user interface 1140, and for different terminal devices, the user interface 1140 may be an interface capable of externally or internally connecting required devices, and the connected devices include, but are not limited to, a keypad, a display, a loudspeaker, a microphone, a joystick, or the like.

In FIG. 11A and FIG. 11B, a bus architecture may include any number of buses and bridges that are interconnected, which specifically link various circuits of one or more processors represented by the processor 1130 and memories represented by the memory 1110 together. The bus architecture may also link together various other circuits such as peripheral devices, voltage regulators, and power management circuits, which are well known in the art, and therefore, will not be further described herein. A bus interface provides the interface. The transceiver 1120 may be a number of elements, i.e., including a transmitter and a receiver, that provide a unit for communicating with various other apparatuses over transmission mediums. The transmission mediums include wireless channels, wired channels, optical cables, or the like. The processor 1130 is responsible for managing the bus architecture and general processing, and the memory 1110 may store data used when the processor 1130 performs operations.

Optionally, the processor 1130 may be a central processing unit CPU, an ASIC, an FPGA, or a CPLD. The processor may also adopt a multi-core architecture.

The processor 1130 is configured to execute all the method steps of the second entity of the embodiment of the present disclosure according to obtained executable instructions by calling the computer program stored in the memory 1110. The processor 1130 and the memory 1110 may be physically arranged separately.

It should be noted herein that the model training apparatus 1100 according to the present disclosure can implement all the method steps implemented by the second entity in the method embodiment and can achieve the same technical effects, and the same parts and beneficial effects of this embodiment as those of the method embodiment are not repeated herein.

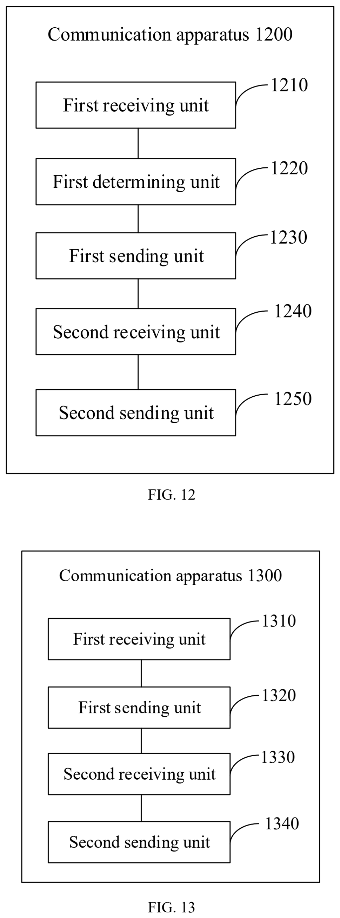

FIG. 12 is a schematic structural diagram of a model training apparatus 1200 according to an embodiment of the present disclosure. As shown in FIG. 12, the apparatus 1200 includes:
a first receiving unit 1210 configured to receive a model training request message sent by a second entity;
a first determining unit 1220 configured to determine model-training-related information according to the model training request message, where the model-training-related information is configured for determining a target Quality of Service (QoS) parameter list and an execution operation list, and the execution operation list is configured for indicating execution operations of a plurality of entities in model training;
a first sending unit 1230 configured to send a first indication message to a third entity, where the first indication message includes the model-training-related information, or the first indication message includes the target QoS parameter list and the execution operation list;
a second receiving unit 1240 configured to receive a first response message sent by the third entity, where the first response message includes a model training result; and
a second sending unit 1250 configured to send a second response message to the second entity, where the second response message includes the model training result.

In an embodiment, the model training request message includes at least one of training duration, first model accuracy, first model complexity, first model inference overhead, a training data volume, a training data source, first model generalization, or an algorithm source.

In an embodiment, the model-training-related information includes at least one of a resource type, a resource size, a training algorithm, or a training mode.

In an embodiment, the first indication message includes the target QoS parameter list and the execution operation list, and the apparatus 1200 further includes:
a first acquiring unit configured to acquire the target QoS parameter list according to the model-training-related information;
a second acquiring unit configured to acquire network resource information from a fourth entity; and
a second determining unit configured to determine the execution operation list according to the target QoS parameter list and the network resource information.

In an embodiment, the first acquiring unit is specifically configured to:
determine a candidate QoS parameter list according to the model-training-related information;
send the candidate QoS parameter list to a fifth entity, where the candidate QoS parameter list is configured for determining the target QoS parameter list; and
receive the target QoS parameter list or a confirmation message sent by the fifth entity, where the confirmation message is configured for indicating that the candidate QoS parameter list is the target QoS parameter list.

In an embodiment, the first acquiring unit is specifically configured to:
send the model-training-related information to the fifth entity; and
receive the target QoS parameter list sent by the fifth entity.

In an embodiment, the target QoS parameter list includes a target QoS parameter of the third entity and a target QoS parameter of at least one sixth entity, or the target QoS parameter list includes the target QoS parameter of the third entity.

In an embodiment, the target QoS parameter includes at least one of a service index parameter, a resource index parameter, a transmission index parameter, or a collaboration index parameter;
the service index parameter includes at least one of second model accuracy, second model generalization, second model complexity, or second model inference overhead;
the resource index parameter includes at least one of the resource type, the resource size, a resource priority, or resource use duration;
the transmission index parameter includes at least one of transmission reliability, a transmission delay, or a transmission bandwidth; and
the collaboration index parameter includes a collaboration type.

In an embodiment, the first indication message further includes a service identifier of model training, a plurality of indicators, and an identifier of an anchor network element, and the plurality of indicators are configured to indicate a current service stage and a next service stage;
the first response message further includes the service identifier and the plurality of indicators; and
the second response message further includes the service identifier and the plurality of indicators.

It should be noted herein that the apparatus 1200 according to the present disclosure can implement all the method steps implemented by the first entity in the method embodiment and can achieve the same technical effects, and the same parts and beneficial effects of this embodiment as those of the method embodiment are not repeated herein.

FIG. 13 is a schematic structural diagram of a model training apparatus 1300 according to an embodiment of the present disclosure. As shown in FIG. 13, the apparatus 1300 includes:
a first receiving unit 1310 configured to receive a first indication message sent by a first entity, where the first indication message includes model-training-related information, or the first indication message includes a target Quality of Service (QoS) parameter list and an execution operation list, and the execution operation list is configured for indicating execution operations of a plurality of entities in model training;
a first sending unit 1320 configured to send an execution operation request message to at least one sixth entity according to the target QoS parameter list and the execution operation list, where the execution operation request message is configured for indicating the at least one sixth entity to perform model training;
a second receiving unit 1330 configured to receive an execution operation response message sent by the at least one sixth entity; and
a second sending unit 1340 configured to send a first response message to the first entity, where the first response message includes a model training result.

In an embodiment, the model-training-related information includes at least one of a resource type, a resource size, a training algorithm, or a training mode.

In an embodiment, the execution operation request message includes at least one of a service identifier of model training, an identifier of a target sixth entity, a plurality of indicators, an execution operation of the target sixth entity, a training data volume, a training data source, or a target QoS parameter of the target sixth entity, and the plurality of indicators are configured for indicating a current service stage and a next service stage;
the execution operation response message includes the service identifier of the model training, the identifier of the target sixth entity, the plurality of indicators and a model training result of the target sixth entity.

In an embodiment, the first indication message includes the model-training-related information, and the apparatus 1300 further includes:
a first acquiring unit configured to acquire the target QoS parameter list according to the model-training-related information;
a second acquiring unit configured to acquire network resource information from a fourth entity; and
a determining unit configured to determine the execution operation list according to the target QoS parameter list and the network resource information.

In an embodiment, the first acquiring unit is specifically configured to:
determine a candidate QoS parameter list according to the model-training-related information;
send the candidate QoS parameter list to a fifth entity, where the candidate QoS parameter list is configured for determining the target QoS parameter list; and
receive the target QoS parameter list or a confirmation message sent by the fifth entity, where the confirmation message is configured for indicating that the candidate QoS parameter list is the target QoS parameter list.

In an embodiment, the first acquiring unit is specifically configured to:
send the model-training-related information to the fifth entity; and
receive the target QoS parameter list sent by the fifth entity.

In an embodiment, the target QoS parameter list includes a target QoS parameter of the third entity and a target QoS parameter of the at least one sixth entity.

In an embodiment, the first indication message includes the target QoS parameter list, the execution operation list, and an identifier of the at least one sixth entity, the target QoS parameter list includes the target QoS parameter of the third entity, and the execution operation list includes an execution operation of the third entity;
the first acquiring unit is further configured to acquire the target QoS parameter of the at least one sixth entity according to the target QoS parameter of the third entity and the identifier of the at least one sixth entity;
the second acquiring unit is configured to acquire the network resource information from the fourth entity;
the determining unit is further configured to determine an execution operation of each sixth entity according to the target QoS parameter of the at least one sixth entity and the network resource information; and
the first sending unit is further configured to send the execution operation request message to each sixth entity, where the execution operation request message includes the target QoS parameter and the execution operation of each sixth entity.

In an embodiment, the first acquiring unit is specifically configured to:
determine at least one candidate QoS parameter according to the target QoS parameter of the third entity and the identifier of the at least one sixth entity;
send the at least one candidate QoS parameter to the fifth entity, where the at least one candidate QoS parameter is configured to determine the target QoS parameter of the at least one sixth entity; and
receive the target QoS parameter of the at least one sixth entity or a confirmation message sent by the fifth entity, where the confirmation message is configured for indicating that the at least one candidate QoS parameter is the target QoS parameter of the at least one sixth entity.

In an embodiment, the first acquiring unit is specifically configured to:
send the target QoS parameter of the third entity and the identifier of the at least one sixth entity to the fifth entity, where the target QoS parameter of the third entity is configured for determining the target QoS parameter of the at least one sixth entity; and
receive the target QoS parameter of the at least one sixth entity sent by the fifth entity.

In an embodiment, the target QoS parameter includes at least one of a service index parameter, a resource index parameter, a transmission index parameter, or a collaboration index parameter;
the service index parameter includes at least one of second model accuracy, second model generalization, second model complexity, or second model inference overhead;
the resource index parameter includes at least one of the resource type, the resource size, a resource priority, or resource use duration;
the transmission index parameter includes at least one of transmission reliability, a transmission delay, or a transmission bandwidth; and
the collaboration index parameter includes a collaboration type.

In an embodiment, the apparatus 1300 further includes:
a third receiving unit configured to receive feedback information from the at least one sixth entity;
a third sending unit configured to send a second indication message to the at least one sixth entity according to the feedback information, where the second indication message is configured for indicating the sixth entity to perform model updating or resource collaboration adjustment; and
a fourth receiving unit configured to receive a third response message sent by the at least one sixth entity.

It should be noted herein that the apparatus 1300 according to the present disclosure can implement all the method steps implemented by the third entity in the method embodiment and can achieve the same technical effects, and the same parts and beneficial effects of this embodiment as those of the method embodiment are not repeated herein.

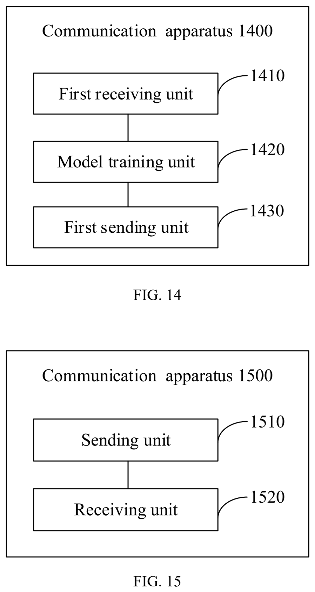

FIG. 14 is a schematic structural diagram of a model training apparatus 1400 according to an embodiment of the present disclosure. As shown in FIG. 14, the apparatus 1400 includes:
a first receiving unit 1410 configured to receive an execution operation request message sent by a third entity;
a model training unit 1420 configured to perform model training according to the execution operation request message, so as to obtain a model training result; and
a first sending unit 1430 configured to send an execution operation response message to the third entity, where the execution operation response message includes the model training result.

In an embodiment, the execution operation request message includes at least one of a service identifier of model training, an identifier of a target sixth entity, a plurality of indicators, an execution operation of the target sixth entity, a training data volume, a training data source, or a target quality of service (QoS) index parameter of the target sixth entity, and the plurality of indicators are configured for indicating a current service stage and a next service stage;
the execution operation response message further includes the service identifier of the model training, an identifier of the sixth entity, and the plurality of indicators.

In an embodiment, the apparatus 1400 further includes:
a second sending unit configured to send feedback information to the third entity;
a second receiving unit configured to receive a second indication message sent by the third entity, where the second indication message is configured for indicating the sixth entity to perform model updating or resource collaboration adjustment; and
a third sending unit configured to send a third response message to the third entity.

It should be noted herein that the apparatus 1400 according to the present disclosure can implement all the method steps implemented by the sixth entity in the method embodiment, and can achieve the same technical effects, and the same parts and beneficial effects of this embodiment as those of the method embodiment are not repeated herein.

FIG. 15 is a schematic structural diagram of a model training apparatus 1500 according to an embodiment of the present disclosure. As shown in FIG. 15, the apparatus includes:
a sending unit 1510 configured to send a model training request message to a first entity; and
a receiving unit 1520 configured to receive a second response message sent by the first entity, where the second response message includes a model training result.

In an embodiment, the model training request message includes at least one of training duration, first model accuracy, first model complexity, first model inference overhead, a training data volume, a training data source, first model generalization, or an algorithm source.

In an embodiment, the second response message further includes a service identifier of model training and a plurality of service procedure indicators, and the plurality of indicators are configured for indicating a current service stage and a next service stage.

It should be noted herein that the apparatus 1500 according to the present disclosure can implement all the method steps implemented by the second entity in the method embodiment, and can achieve the same technical effects, and the same parts and beneficial effects of this embodiment as those of the method embodiment are not repeated herein.

It should be noted that the division of the units in the embodiments of the present disclosure is schematic, and is only logical function division, and there may be other division manners in actual implementation. In addition, functional units in the embodiments of the present disclosure may be integrated into one processing unit, or each of the units may exist physically alone, or two or more units may be integrated into one unit. The integrated unit can be realized in the form of hardware or a software functional unit.

When implemented in the form of software functional units and sold or used as independent products, the integrated units can be stored in a processor-readable storage medium. Based on such an understanding, the technical solutions of the present disclosure essentially, or the part contributing to the prior art, or all or a part of the technical solutions may be implemented in the form of a software product. The computer software product is stored in a storage medium and includes several instructions for instructing a computer device (which may be a personal computer, a server, or a network device, etc.) or a processor to perform all or a part of steps of the method described in the embodiments of the present disclosure. The foregoing storage medium includes various mediums that can store program codes such as a Universal Serial Bus (USB) flash disk, a mobile hard disk, a Read-Only Memory (ROM), a Random Access Memory (RAM), a magnetic disk, or an optical disk.

An embodiment of the present disclosure further provides a non-transitory readable storage medium storing a computer program for causing a processor to perform all the method steps of the first entity in the method embodiment.

An embodiment of the present disclosure further provides a non-transitory readable storage medium storing a computer program for causing a processor to perform all the method steps of the third entity in the method embodiment.

An embodiment of the present disclosure further provides a non-transitory readable storage medium storing a computer program for causing a processor to perform all the method steps of the sixth entity in the method embodiment.

An embodiment of the present disclosure further provides a non-transitory readable storage medium storing a computer program for causing a processor to perform all the method steps of the second entity in the method embodiment.

The non-transitory readable storage medium may be any available medium or data storage device that can be accessed by a computer, including but not limited to a magnetic storage (e.g., a floppy disk, a hard disk, a magnetic tape, a magneto-optical disk (MO), etc.), an optical storage (e.g., a CD, a DVD, a BD, an HVD, etc.), and a semiconductor storage (e.g., an ROM, an EPROM, an EEPROM, a non-transitory memory (NAND FLASH), and a solid-state disk (SSDs)), etc.

An embodiment of the present disclosure further provides a computer program product including a computer program, when the computer program is executed by a processor, the method according to any one of the above method embodiments is implemented.

Those skilled in the art may understand that the embodiments of present disclosure may be provided as a method, a system or a computer program product. Therefore, the present disclosure may take the form of an entirely hardware embodiment, an entirely software embodiment, or an embodiment combining software and hardware aspects. In addition, the present disclosure may take the form of a computer program product implemented in one or more computer available storage medium including computer available program codes (including but not limited to a disk storage, an optical storage, etc.).

The present disclosure is described with reference to the flow chart and/or block diagram of the methods, apparatus (systems), and computer program products according to the embodiments of the present disclosure. It should be understood that each flow and/or block of the flow chart and/or block diagram or a combination of each flow and/or block of the flow chart and/or block diagram may be implemented by the computer executable instructions. These computer executable instructions may be provided to a general purpose computer, a dedicated computer, an embedded processor or the processors of other programmable data processing devices to make a machine, so as to make the instructions executed by the processor of the computer or other programmable data processing devices produce devices for implementing the functions prescribed in one or more flows in the flow chart and/or one or more blocks in the block diagram.

These processor executable instructions may further be stored in a processor readable memory capable of directing a computer or other programmable data processing devices to work in a specific manner, so that the instructions stored in the processor readable memory may produce an article of manufacture including an instruction apparatus, where the instruction apparatus implements the functions prescribed in one or more flows in the flow chart and/or one or more blocks in the block diagram.

These processor executable instructions may further be loaded into a computer or other programmable data processing devices, so that a series of operation steps may be performed in the computer or other programmable devices, so as to produce computer-implemented processing, so that the instructions performed in the computer or other programmable devices may provide the steps for implementing the functions prescribed in one or more flows in the flow chart and/or one or more blocks in the block diagram.

Obviously, those skilled in the art can make various modifications and variations to the present disclosure without departing from the spirit and scope of the present disclosure. Thus, if these modifications and variations of the present disclosure fall within the scope of the claims of the present disclosure and equivalents thereof, the present disclosure also intends to include these modifications and variations.

## Claims

1. A model training method, **characterized in that** the method is applied to a first entity, and the method comprises:
receiving a model training request message sent by a second entity;
determining model-training-related information according to the model training request message, wherein the model-training-related information is configured for determining a target Quality of Service (QoS) parameter list and an execution operation list, and the execution operation list is configured for indicating execution operations of a plurality of entities in model training;
sending a first indication message to a third entity, wherein the first indication message comprises the model-training-related information, or the first indication message comprises the target QoS parameter list and the execution operation list;
receiving a first response message sent by the third entity, wherein the first response message comprises a model training result; and
sending a second response message to the second entity, wherein the second response message comprises the model training result.

2. The method according to claim 1, wherein the model training request message comprises at least one of: training duration, first model accuracy, first model complexity, first model inference overhead, a training data volume, a training data source, first model generalization, or an algorithm source.

3. The method according to claim 1 or 2, wherein the model-training-related information comprises at least one of: a resource type, a resource size, a training algorithm, or a training mode.

4. The method according to claim 3, wherein the first indication message comprises the target QoS parameter list and the execution operation list; and before sending the first indication message to the third entity, the method further comprises:
acquiring the target QoS parameter list according to the model-training-related information;
acquiring network resource information from a fourth entity; and
determining the execution operation list according to the target QoS parameter list and the network resource information.

5. The method according to claim 4, wherein acquiring the target QoS parameter list according to the model-training-related information comprises:
determining a candidate QoS parameter list according to the model-training-related information;
sending the candidate QoS parameter list to a fifth entity, wherein the candidate QoS parameter list is configured for determining the target QoS parameter list; and
receiving the target QoS parameter list or a confirmation message sent by the fifth entity, wherein the confirmation message is configured for indicating that the candidate QoS parameter list is the target QoS parameter list.

6. The method according to claim 4, wherein acquiring the target QoS parameter list according to the model-training-related information comprises:
sending the model-training-related information to the fifth entity; and
receiving the target QoS parameter list sent by the fifth entity.

7. The method according to claim 5 or 6, wherein the target QoS parameter list comprises a target QoS parameter of the third entity and a target QoS parameter of at least one sixth entity, or the target QoS parameter list comprises the target QoS parameter of the third entity.

8. The method according to claim 7, wherein the target QoS parameter comprises at least one of: a service index parameter, a resource index parameter, a transmission index parameter, or a collaboration index parameter;
the service index parameter comprises at least one of: second model accuracy, second model generalization, second model complexity, or second model inference overhead;
the resource index parameter comprises at least one of: the resource type, the resource size, a resource priority, or resource use duration;
the transmission index parameter comprises at least one of: transmission reliability, a transmission delay, or a transmission bandwidth; and
the collaboration index parameter comprises a collaboration type.

9. The method according to claim 1, wherein the first indication message further comprises a service identifier of model training, a plurality of indicators, and an identifier of an anchor network element, and the plurality of indicators are configured to indicate a current service stage and a next service stage;
the first response message further comprises the service identifier and the plurality of indicators; and
the second response message further comprises the service identifier and the plurality of indicators.

10. The method according to claim 8, wherein the first entity is deployed at a first access network device or a first core network device;
the second entity is a first terminal device, or the second entity is deployed at a second terminal device, a second access network device, or a second core network device;
the third entity is a third terminal device, or the third entity is deployed at a fourth terminal device, a third access network device, or a third core network device;
the fourth entity is deployed at a fourth access network device or a fourth core network device;
the fifth entity is deployed at a fifth access network device or a fifth core network device;
each sixth entity is a fifth terminal device, or each sixth entity is deployed at a sixth terminal device, a sixth access network device, or a sixth core network device;
the first terminal device, the third terminal device, and the fifth terminal device are the same or different, the second terminal device, the fourth terminal device, and the sixth terminal device are the same or different, the first access network device, the second access network device, the third access network device, the fourth access network device, the fifth access network device, and the sixth access network device are the same or different, and the first core network device, the second core network device, the third core network device, the fourth core network device, the fifth core network device, and the sixth core network device are the same or different.

11. A model training method, **characterized in that** the method is applied to a third entity, and the method comprises:
receiving a first indication message sent by a first entity, wherein the first indication message comprises model-training-related information, or the first indication message comprises a target Quality of Service (QoS) parameter list and an execution operation list, and the execution operation list is configured for indicating execution operations of a plurality of entities in model training;
sending an execution operation request message to at least one sixth entity according to the target QoS parameter list and the execution operation list, wherein the execution operation request message is configured for indicating the at least one sixth entity to perform model training;
receiving an execution operation response message sent by the at least one sixth entity; and
sending a first response message to the first entity, wherein the first response message comprises a model training result.

12. The method according to claim 11, wherein the model-training-related information comprises at least one of: a resource type, a resource size, a training algorithm, or a training mode.

13. The method according to claim 11 or 12, wherein the execution operation request message comprises at least one of: a service identifier of model training, an identifier of a target sixth entity, a plurality of indicators, an execution operation of the target sixth entity, a training data volume, a training data source, or a target QoS parameter of the target sixth entity, and the plurality of indicators are configured for indicating a current service stage and a next service stage; and
the execution operation response message comprises the service identifier of the model training, the identifier of the target sixth entity, the plurality of indicators, and a model training result of the target sixth entity.

14. The method according to any one of claims 11 to 13, wherein the first indication message comprises the model-training-related information; and before sending the execution operation request message to the at least one sixth entity, the method further comprises:
acquiring the target QoS parameter list according to the model-training-related information;
acquiring network resource information from a fourth entity; and
determining the execution operation list according to the target QoS parameter list and the network resource information.

15. The method according to claim 14, wherein acquiring the target QoS parameter list according to the model-training-related information comprises:
determining a candidate QoS parameter list according to the model-training-related information;
sending the candidate QoS parameter list to a fifth entity, wherein the candidate QoS parameter list is configured for determining the target QoS parameter list; and
receiving the target QoS parameter list or a confirmation message sent by the fifth entity, wherein the confirmation message is configured for indicating that the candidate QoS parameter list is the target QoS parameter list.

16. The method according to claim 14, wherein acquiring the target QoS parameter list according to the model-training-related information comprises:
sending the model-training-related information to the fifth entity; and
receiving the target QoS parameter list sent by the fifth entity.

17. The method according to any one of claims 11 to 16, wherein the target QoS parameter list comprises a target QoS parameter of the third entity and a target QoS parameter of the at least one sixth entity.

18. The method according to any one of claims 11 to 13, wherein the first indication message comprises the target QoS parameter list, the execution operation list, and an identifier of the at least one sixth entity, the target QoS parameter list comprises the target QoS parameter of the third entity, and the execution operation list comprises an execution operation of the third entity; and
sending the execution operation request message to the at least one sixth entity according to the target QoS parameter list and the execution operation list comprises:
acquiring the target QoS parameter of the at least one sixth entity according to the target QoS parameter of the third entity and the identifier of the at least one sixth entity;
acquiring network resource information from a fourth entity;
determining an execution operation of each sixth entity according to the target QoS parameter of the at least one sixth entity and the network resource information; and
sending the execution operation request message to each sixth entity, wherein the execution operation request message comprises the target QoS parameter of each sixth entity and the execution operation of each sixth entity.

19. The method according to claim 18, wherein acquiring the target QoS parameter of the at least one sixth entity comprises:
determining at least one candidate QoS parameter according to the target QoS parameter of the third entity and the identifier of the at least one sixth entity;
sending the at least one candidate QoS parameter to the fifth entity, wherein the at least one candidate QoS parameter is configured for determining the target QoS parameter of the at least one sixth entity; and
receiving the target QoS parameter of the at least one sixth entity or a confirmation message sent by the fifth entity, wherein the confirmation message is configured for indicating that the at least one candidate QoS parameter is the target QoS parameter of the at least one sixth entity.

20. The method according to claim 18, wherein acquiring the target QoS parameter of the at least one sixth entity comprises:
sending the target QoS parameter of the third entity and the identifier of the at least one sixth entity to the fifth entity, wherein the target QoS parameter of the third entity is configured for determining the target QoS parameter of the at least one sixth entity; and
receiving the target QoS parameter of the at least one sixth entity sent by the fifth entity.

21. The method according to claim 13, 17 or 18, wherein the target QoS parameter comprises at least one of: a service index parameter, a resource index parameter, a transmission index parameter, or a collaboration index parameter;
the service index parameter comprises at least one of: second model accuracy, second model generalization, second model complexity, or second model inference overhead;
the resource index parameter comprises at least one of: the resource type, the resource size, a resource priority, or resource use duration;
the transmission index parameter comprises at least one of: transmission reliability, a transmission delay, or a transmission bandwidth; and
the collaboration index parameter comprises a collaboration type.

22. The method according to any one of claims 11 to 21, wherein the method further comprises:
receiving feedback information from the at least one sixth entity;
sending a second indication message to the at least one sixth entity according to the feedback information, wherein the second indication message is configured for indicating the sixth entity to perform model updating or resource collaboration adjustment; and
receiving a third response message sent by the at least one sixth entity.

23. The method according to claim 15, 16, 19, or 20, wherein the first entity is deployed at a first access network device or a first core network device;
the third entity is a third terminal device, or the third entity is deployed at a fourth terminal device, a third access network device, or a third core network device;
the fifth entity is deployed at a fifth access network device or a fifth core network device;
each sixth entity is a fifth terminal device, or each sixth entity is deployed at a sixth terminal device, a sixth access network device, or a sixth core network device;
the third terminal device and the fifth terminal device are the same or different, the fourth terminal device and the sixth terminal device are the same or different, the first access network device, the third access network device, the fifth access network device, and the sixth access network device are the same or different, and the first core network device, the third core network device, the fifth core network device, and the sixth core network device are the same or different.

24. A model training method, **characterized in that** the method is applied to a sixth entity, and the method comprises:
receiving an execution operation request message sent by a third entity;
performing model training according to the execution operation request message, so as to obtain a model training result; and
sending an execution operation response message to the third entity, wherein the execution operation response message comprises the model training result.

25. The method according to claim 24, wherein the execution operation request message comprises at least one of: a service identifier of model training, an identifier of a target sixth entity, a plurality of indicators, an execution operation of the target sixth entity, a training data volume, a training data source, or a target Quality of Service (QoS) parameter of the target sixth entity, and the plurality of indicators are configured for indicating a current service stage and a next service stage; and
the execution operation response message further comprises the service identifier of the model training, an identifier of the sixth entity, and the plurality of indicators.

26. The method according to any one of claims 24 or 25, wherein the method further comprises:
sending feedback information to the third entity;
receiving a second indication message sent by the third entity, wherein the second indication message is configured for indicating the sixth entity to perform model updating or resource collaboration adjustment; and
sending a third response message to the third entity.

27. The method according to claim 24, wherein the third entity is a third terminal device, or the third entity is deployed at a fourth terminal device, a third access network device, or a third core network device;
each sixth entity is a fifth terminal device, or each sixth entity is deployed at a sixth terminal device, a sixth access network device, or a sixth core network device;
the third terminal device and the fifth terminal device are the same or different, the fourth terminal device and the sixth terminal device are the same or different, the third access network device and the sixth access network device are the same or different, and the third core network device and the sixth core network device are the same or different.

28. A model training method, **characterized in that** the method is applied to a second entity, and the method comprises:
sending a model training request message to a first entity; and
receiving a second response message sent by the first entity, wherein the second response message comprises a model training result.

29. The method according to claim 28, wherein the model training request message comprises at least one of: training duration, first model accuracy, first model complexity, first model inference overhead, a training data volume, a training data source, first model generalization, or an algorithm source.

30. The method according to claim 28 or 29, wherein the second response message further comprises a service identifier of model training and a plurality of service procedure indicators, and the plurality of indicators are configured for indicating a current service stage and a next service stage.

31. The method according to claim 28, wherein the first entity is deployed at a first access network device or a first core network device;
the second entity is a first terminal device, or the second entity is deployed at a second terminal device, a second access network device, or a second core network device;
the first access network device and the second access network device are the same or different, and the first core network device and the second core network device are the same or different.

32. A model training apparatus, **characterized in that** the apparatus is applied to a first entity, and the apparatus comprises:
a first receiving unit configured to receive a model training request message sent by a second entity;
a first determining unit configured to determine model-training-related information according to the model training request message, wherein the model-training-related information is configured for determining a target Quality of Service (QoS) parameter list and an execution operation list, and the execution operation list is configured for indicating execution operations of a plurality of entities in model training;
a first sending unit configured to send a first indication message to a third entity, wherein the first indication message comprises the model-training-related information, or the first indication message comprises the target QoS parameter list and the execution operation list;
a second receiving unit configured to receive a first response message sent by the third entity, wherein the first response message comprises a model training result; and
a second sending unit configured to send a second response message to the second entity, wherein the second response message comprises the model training result.

33. The apparatus according to claim 32, wherein the model training request message comprises at least one of: training duration, first model accuracy, first model complexity, first model inference overhead, a training data volume, a training data source, first model generalization, or an algorithm source.

34. The apparatus according to claim 32 or 33, wherein the model-training-related information comprises at least one of: a resource type, a resource size, a training algorithm, or a training mode.

35. The apparatus according to claim 34, wherein the first indication message comprises the target QoS parameter list and the execution operation list; and the apparatus further comprises:
a first acquiring unit configured to acquire the target QoS parameter list according to the model-training-related information;
a second acquiring unit configured to acquire network resource information from a fourth entity; and
a second determining unit configured to determine the execution operation list according to the target QoS parameter list and the network resource information.

36. The apparatus according to claim 35, wherein the first acquiring unit is specifically configured to:
determine a candidate QoS parameter list according to the model-training-related information;
send the candidate QoS parameter list to a fifth entity, wherein the candidate QoS parameter list is configured for determining the target QoS parameter list; and
receive the target QoS parameter list or a confirmation message sent by the fifth entity, wherein the confirmation message is configured for indicating that the candidate QoS parameter list is the target QoS parameter list.

37. The apparatus according to claim 35, wherein the first acquiring unit is specifically configured to:
send the model-training-related information to the fifth entity; and
receive the target QoS parameter list sent by the fifth entity.

38. The apparatus according to claim 36 or 37, wherein the target QoS parameter list comprises a target QoS parameter of the third entity and a target QoS parameter of at least one sixth entity, or the target QoS parameter list comprises the target QoS parameter of the third entity.

39. The apparatus according to claim 38, wherein the target QoS parameter comprises at least one of: a service index parameter, a resource index parameter, a transmission index parameter, or a collaboration index parameter;
the service index parameter comprises at least one of: second model accuracy, second model generalization, second model complexity, or second model inference overhead;
the resource index parameter comprises at least one of: the resource type, the resource size, a resource priority, or resource use duration;
the transmission index parameter comprises at least one of: transmission reliability, a transmission delay, or a transmission bandwidth; and
the collaboration index parameter comprises a collaboration type.

40. The apparatus according to claim 32, wherein the first indication message further comprises a service identifier of model training, a plurality of indicators, and an identifier of an anchor network element, and the plurality of indicators are configured to indicate a current service stage and a next service stage;
the first response message further comprises the service identifier and the plurality of indicators; and
the second response message further comprises the service identifier and the plurality of indicators.

41. A model training apparatus, **characterized in that** the apparatus is applied to a third entity, and the apparatus comprises:
a first receiving unit configured to receive a first indication message sent by a first entity, wherein the first indication message comprises model-training-related information, or the first indication message comprises a target Quality of Service (QoS) parameter list and an execution operation list, and the execution operation list is configured for indicating execution operations of a plurality of entities in model training;
a first sending unit configured to send an execution operation request message to at least one sixth entity according to the target QoS parameter list and the execution operation list, wherein the execution operation request message is configured for indicating the at least one sixth entity to perform model training;
a second receiving unit configured to receive an execution operation response message sent by the at least one sixth entity; and
a second sending unit configured to send a first response message to the first entity, wherein the first response message comprises a model training result.

42. The apparatus according to claim 41, wherein the model-training-related information comprises at least one of: a resource type, a resource size, a training algorithm, or a training mode.

43. The apparatus according to claim 41 or 42, wherein the execution operation request message comprises at least one of: a service identifier of model training, an identifier of a target sixth entity, a plurality of indicators, an execution operation of the target sixth entity, a training data volume, a training data source, or a target QoS parameter of the target sixth entity, and the plurality of indicators are configured for indicating a current service stage and a next service stage; and
the execution operation response message comprises the service identifier of the model training, the identifier of the target sixth entity, the plurality of indicators, and a model training result of the target sixth entity.

44. The apparatus according to any one of claims 41 to 43, wherein the first indication message comprises the model-training-related information; and the apparatus further comprises:
a first acquiring unit configured to acquire the target QoS parameter list according to the model-training-related information;
a second acquiring unit configured to acquire network resource information from a fourth entity; and
a determining unit configured to determine the execution operation list according to the target QoS parameter list and the network resource information.

45. The apparatus according to claim 44, wherein the first acquiring unit is specifically configured to:
determine a candidate QoS parameter list according to the model-training-related information;
send the candidate QoS parameter list to a fifth entity, wherein the candidate QoS parameter list is configured for determining the target QoS parameter list; and
receive the target QoS parameter list or a confirmation message sent by the fifth entity, wherein the confirmation message is configured for indicating that the candidate QoS parameter list is the target QoS parameter list.

46. The apparatus according to claim 44, wherein the first acquiring unit is specifically configured to:
send the model-training-related information to the fifth entity; and
receive the target QoS parameter list sent by the fifth entity.

47. The apparatus according to any one of claims 41 to 46, wherein the target QoS parameter list comprises a target QoS parameter of the third entity and a target QoS parameter of the at least one sixth entity.

48. The apparatus according to any one of claims 41 to 43, wherein the first indication message comprises the target QoS parameter list, the execution operation list, and an identifier of the at least one sixth entity, the target QoS parameter list comprises the target QoS parameter of the third entity, and the execution operation list comprises an execution operation of the third entity;
the first acquiring unit is further configured to acquire the target QoS parameter of the at least one sixth entity according to the target QoS parameter of the third entity and the identifier of the at least one sixth entity;
the second acquiring unit is configured to acquire network resource information from a fourth entity;
the determining unit is further configured to determine an execution operation of each sixth entity according to the target QoS parameter of the at least one sixth entity and the network resource information; and
the first sending unit is further configured to send the execution operation request message to each sixth entity, wherein the execution operation request message comprises the target QoS parameter of each sixth entity and the execution operation of each sixth entity.

49. The apparatus according to claim 48, wherein the first acquiring unit is specifically configured to:
determine at least one candidate QoS parameter according to the target QoS parameter of the third entity and the identifier of the at least one sixth entity;
send the at least one candidate QoS parameter to the fifth entity, wherein the at least one candidate QoS parameter is configured for determining the target QoS parameter of the at least one sixth entity; and
receive the target QoS parameter of the at least one sixth entity or a confirmation message sent by the fifth entity, wherein the confirmation message is configured for indicating that the at least one candidate QoS parameter is the target QoS parameter of the at least one sixth entity.

50. The apparatus according to claim 48, wherein the first acquiring unit is specifically configured to:
send the target QoS parameter of the third entity and the identifier of the at least one sixth entity to the fifth entity, wherein the target QoS parameter of the third entity is configured for determining the target QoS parameter of the at least one sixth entity; and
receive the target QoS parameter of the at least one sixth entity sent by the fifth entity.

51. The apparatus according to claim 43, 47 or 48, wherein the target QoS parameter comprises at least one of: a service index parameter, a resource index parameter, a transmission index parameter, or a collaboration index parameter;
the service index parameter comprises at least one of: second model accuracy, second model generalization, second model complexity, or second model inference overhead;
the resource index parameter comprises at least one of: the resource type, the resource size, a resource priority, or resource use duration;
the transmission index parameter comprises at least one of: transmission reliability, a transmission delay, or a transmission bandwidth; and
the collaboration index parameter comprises a collaboration type.

52. The apparatus according to any one of claims 41 to 51, wherein the apparatus further comprises:
a third receiving unit configured to receive feedback information from the at least one sixth entity;
a third sending unit configured to send a second indication message to the at least one sixth entity according to the feedback information, wherein the second indication message is configured for indicating the sixth entity to perform model updating or resource collaboration adjustment; and
a fourth receiving unit configured to receive a third response message sent by the at least one sixth entity.

53. A model training apparatus, **characterized in that** the apparatus is applied to a sixth entity, and the apparatus comprises:
a first receiving unit configured to receive an execution operation request message sent by a third entity;
a model training unit configured to perform model training according to the execution operation request message, so as to obtain a model training result; and
a first sending unit configured to send an execution operation response message to the third entity, wherein the execution operation response message comprises the model training result.

54. The apparatus according to claim 53, wherein the execution operation request message comprises at least one of: a service identifier of model training, an identifier of a target sixth entity, a plurality of indicators, an execution operation of the target sixth entity, a training data volume, a training data source, or a target Quality of Service (QoS) parameter of the target sixth entity, and the plurality of indicators are configured for indicating a current service stage and a next service stage; and
the execution operation response message further comprises the service identifier of the model training, an identifier of the sixth entity, and the plurality of indicators.

55. The apparatus according to claim 53 or 54, wherein the apparatus further comprises:
a second sending unit configured to send feedback information to the third entity;
a second receiving unit configured to receive a second indication message sent by the third entity, wherein the second indication message is configured for indicating the sixth entity to perform model updating or resource collaboration adjustment; and
a third sending unit configured to send a third response message to the third entity.

56. A model training apparatus, **characterized in that** the apparatus is applied to a second entity, and the apparatus comprises:
a sending unit configured to send a model training request message to a first entity; and
a receiving unit configured to receive a second response message sent by the first entity, wherein the second response message comprises a model training result.

57. The apparatus according to claim 56, wherein the model training request message comprises at least one of: training duration, first model accuracy, first model complexity, first model inference overhead, a training data volume, a training data source, first model generalization, or an algorithm source.

58. The apparatus according to claim 56 or 57, wherein the second response message further comprises a service identifier of model training and a plurality of service procedure indicators, and the plurality of indicators are configured for indicating a current service stage and a next service stage.

59. A model training apparatus, **characterized in that** the apparatus is applied to a first entity, and the apparatus comprises a memory, a transceiver, and a processor:
the memory is configured for storing a computer program; the transceiver is configured for transmitting and receiving data under control of the processor; and the processor is configured for reading the computer program in the memory and performing the following operations:
receiving a model training request message sent by a second entity;
determining model-training-related information according to the model training request message, wherein the model-training-related information is configured for determining a target Quality of Service (QoS) parameter list and an execution operation list, and the execution operation list is configured for indicating execution operations of a plurality of entities in model training;
sending a first indication message to a third entity, wherein the first indication message comprises the model-training-related information, or the first indication message comprises the target QoS parameter list and the execution operation list;
receiving a first response message sent by the third entity, wherein the first response message comprises a model training result; and
sending a second response message to the second entity, wherein the second response message comprises the model training result.

60. The apparatus according to claim 59, wherein the model training request message comprises at least one of: training duration, first model accuracy, first model complexity, first model inference overhead, a training data volume, a training data source, first model generalization, or an algorithm source.

61. The apparatus according to claim 59 or 60, wherein the model-training-related information comprises at least one of: a resource type, a resource size, a training algorithm, or a training mode.

62. The apparatus according to claim 61, wherein the first indication message comprises the target QoS parameter list and the execution operation list; and the processor is specifically configured to perform the following operations:
acquiring the target QoS parameter list according to the model-training-related information;
acquiring network resource information from a fourth entity; and
determining the execution operation list according to the target QoS parameter list and the network resource information.

63. The apparatus according to claim 62, wherein the processor is specifically configured to perform the following operations:
determining a candidate QoS parameter list according to the model-training-related information;
sending the candidate QoS parameter list to a fifth entity, wherein the candidate QoS parameter list is configured for determining the target QoS parameter list; and
receiving the target QoS parameter list or a confirmation message sent by the fifth entity, wherein the confirmation message is configured for indicating that the candidate QoS parameter list is the target QoS parameter list.

64. The apparatus according to claim 62, wherein the processor is specifically configured to perform the following operations:
sending the model-training-related information to the fifth entity; and
receiving the target QoS parameter list sent by the fifth entity.

65. The apparatus according to claim 63 or 64, wherein the target QoS parameter list comprises a target QoS parameter of the third entity and a target QoS parameter of at least one sixth entity, or the target QoS parameter list comprises the target QoS parameter of the third entity.

66. The apparatus according to claim 65, wherein the target QoS parameter comprises at least one of: a service index parameter, a resource index parameter, a transmission index parameter, or a collaboration index parameter;
the service index parameter comprises at least one of: second model accuracy, second model generalization, second model complexity, or second model inference overhead;
the resource index parameter comprises at least one of: the resource type, the resource size, a resource priority, or resource use duration;
the transmission index parameter comprises at least one of: transmission reliability, a transmission delay, or a transmission bandwidth; and
the collaboration index parameter comprises a collaboration type.

67. A model training apparatus, **characterized in that** the apparatus is applied to a third entity, and the apparatus comprises a memory, a transceiver, and a processor:
the memory is configured for storing a computer program; the transceiver is configured for transmitting and receiving data under control of the processor; and the processor is configured for reading the computer program in the memory and performing the following operations:
receiving a first indication message sent by a first entity, wherein the first indication message comprises model-training-related information, or the first indication message comprises a target Quality of Service (QoS) parameter list and an execution operation list, and the execution operation list is configured for indicating execution operations of a plurality of entities in model training;
sending an execution operation request message to at least one sixth entity according to the target QoS parameter list and the execution operation list, wherein the execution operation request message is configured for indicating the at least one sixth entity to perform model training;
receiving an execution operation response message sent by the at least one sixth entity; and
sending a first response message to the first entity, wherein the first response message comprises a model training result.

68. The apparatus according to claim 67, wherein the model-training-related information comprises at least one of: a resource type, a resource size, a training algorithm, or a training mode.

69. The apparatus according to claim 67 or 68, wherein the execution operation request message comprises at least one of: a service identifier of model training, an identifier of a target sixth entity, a plurality of indicators, an execution operation of the target sixth entity, a training data volume, a training data source, or a target QoS parameter of the target sixth entity, and the plurality of indicators are configured for indicating a current service stage and a next service stage; and
the execution operation response message comprises the service identifier of the model training, the identifier of the target sixth entity, the plurality of indicators, and a model training result of the target sixth entity.

70. The apparatus according to any one of claims 67 to 69, wherein the first indication message comprises the model-training-related information; and the processor is further configured to perform the following operations:
acquiring the target QoS parameter list according to the model-training-related information;
acquiring network resource information from a fourth entity; and
determining the execution operation list according to the target QoS parameter list and the network resource information.

71. The apparatus according to claim 70, wherein the processor is specifically configured to perform the following operations:
determining a candidate QoS parameter list according to the model-training-related information;
sending the candidate QoS parameter list to a fifth entity, wherein the candidate QoS parameter list is configured for determining the target QoS parameter list; and
receiving the target QoS parameter list or a confirmation message sent by the fifth entity, wherein the confirmation message is configured for indicating that the candidate QoS parameter list is the target QoS parameter list.

72. The apparatus according to claim 70, wherein the processor is specifically configured to perform the following operations:
sending the model-training-related information to the fifth entity; and
receiving the target QoS parameter list sent by the fifth entity.

73. The apparatus according to any one of claims 67 to 72, wherein the target QoS parameter list comprises a target QoS parameter of the third entity and a target QoS parameter of the at least one sixth entity.

74. The apparatus according to any one of claims 67 to 69, wherein the first indication message comprises the target QoS parameter list, the execution operation list, and an identifier of the at least one sixth entity, the target QoS parameter list comprises the target QoS parameter of the third entity, and the execution operation list comprises an execution operation of the third entity; and the processor is specifically configured to perform the following operations:
acquiring the target QoS parameter of the at least one sixth entity according to the target QoS parameter of the third entity and the identifier of the at least one sixth entity;
acquiring network resource information from a fourth entity;
determining an execution operation of each sixth entity according to the target QoS parameter of the at least one sixth entity and the network resource information; and
sending the execution operation request message to each sixth entity, wherein the execution operation request message comprises the target QoS parameter of each sixth entity and the execution operation of each sixth entity.

75. The apparatus according to claim 74, wherein the processor is specifically configured to perform the following operations:
determining at least one candidate QoS parameter according to the target QoS parameter of the third entity and the identifier of the at least one sixth entity;
sending the at least one candidate QoS parameter to the fifth entity, wherein the at least one candidate QoS parameter is configured to determine the target QoS parameter of the at least one sixth entity; and
receiving the target QoS parameter of the at least one sixth entity or a confirmation message sent by the fifth entity, wherein the confirmation message is configured for indicating that the at least one candidate QoS parameter is the target QoS parameter of the at least one sixth entity.

76. The apparatus according to claim 74, wherein the processor is specifically configured to perform the following operations:
sending the target QoS parameter of the third entity and the identifier of the at least one sixth entity to the fifth entity, wherein the target QoS parameter of the third entity is configured for determining the target QoS parameter of the at least one sixth entity; and
receiving the target QoS parameter of the at least one sixth entity sent by the fifth entity.

77. The apparatus according to claim 69, 73 or 74, wherein the target QoS parameter comprises at least one of: a service index parameter, a resource index parameter, a transmission index parameter, or a collaboration index parameter;
the service index parameter comprises at least one of: second model accuracy, second model generalization, second model complexity, or second model inference overhead;
the resource index parameter comprises at least one of: the resource type, the resource size, a resource priority, or resource use duration;
the transmission index parameter comprises at least one of: transmission reliability, a transmission delay, or a transmission bandwidth; and
the collaboration index parameter comprises a collaboration type.

78. The apparatus according to any one of claims 67 to 77, wherein the processor is specifically configured to perform the following operations:
receiving feedback information from the at least one sixth entity;
sending a second indication message to the at least one sixth entity according to the feedback information, wherein the second indication message is configured for indicating the sixth entity to perform model updating or resource collaboration adjustment; and
receiving a third response message sent by the at least one sixth entity.

79. A model training apparatus, **characterized in that** the apparatus is applied to a sixth entity, and the apparatus comprises a memory, a transceiver, and a processor:
the memory is configured for storing a computer program; the transceiver is configured for transmitting and receiving data under control of the processor; and the processor is configured for reading the computer program in the memory and performing the following operations:
receiving an execution operation request message sent by a third entity;
performing model training according to the execution operation request message, so as to obtain a model training result; and
sending an execution operation response message to the third entity, wherein the execution operation response message comprises the model training result.

80. The apparatus according to claim 79, wherein the execution operation request message comprises at least one of: a service identifier of model training, an identifier of a target sixth entity, a plurality of indicators, an execution operation of the target sixth entity, a training data volume, a training data source, or a target Quality of Service (QoS) parameter of the target sixth entity, and the plurality of indicators are configured for indicating a current service stage and a next service stage; and
the execution operation response message further comprises the service identifier of the model training, an identifier of the sixth entity, and the plurality of indicators.

81. The apparatus according to claim 79 or 80, wherein the processor is specifically configured to perform the following operations:
sending feedback information to the third entity;
receiving a second indication message sent by the third entity, wherein the second indication message is configured for indicating the sixth entity to perform model updating or resource collaboration adjustment; and
sending a third response message to the third entity.

82. A model training apparatus, **characterized in that** the apparatus is applied to a second entity, and the apparatus comprises a memory, a transceiver, and a processor:
the memory is configured for storing a computer program; the transceiver is configured for transmitting and receiving data under control of the processor; and the processor is configured for reading the computer program in the memory and performing the following operations:
sending a model training request message to a first entity; and
receiving a second response message sent by the first entity, wherein the second response message comprises a model training result.

83. The apparatus according to claim 82, wherein the model training request message comprises at least one of: training duration, first model accuracy, first model complexity, first model inference overhead, a training data volume, a training data source, first model generalization, or an algorithm source.

84. A non-transitory readable storage medium storing a computer program for causing a processor to perform the method according to any one of claims 1 to 10, or the method according to any one of claims 11 to 23, or the method according to any one of claims 24 to 27, or the method according to any one of claims 28 to 31.
